# FASCICULE DE BREVET EUROPEEN

(11) **EP 4 124 788 B1**
(45) Date de publication et mention de la délivrance du brevet: **15.05.2024**
(21) Numéro de dépôt: 22187476.1
(22) Date de dépôt: 28.07.2022
(51) Int. Cl.: F16L 37/23, F16L 37/22, F16L 37/32

(54) **ÉLÉMENT MÂLE DE RACCORD FLUIDIQUE ET RACCORD FLUIDIQUE COMPRENANT UN TEL ÉLÉMENT MÂLE**
STECKANSCHLUSSELEMENT EINES FLUIDANSCHLUSSES UND EIN SOLCHES STECKELEMENT UMFASSENDER FLUIDANSCHLUSS
MALE ELEMENT FOR FLUID CONNECTOR AND FLUID CONNECTOR COMPRISING SUCH A MALE ELEMENT

(30) Priorité: 29.07.2021 FR 2108260
(43) Date de publication de la demande: 01.02.2023
(73) Titulaire: Staubli Faverges, 74210 Faverges-Seythenex (FR)
(72) Inventeur: DURIEUX, Christophe, 73200 GILLY SUR ISERE (FR); MOREL, Frédéric, 74210 LATHUILE (FR); MILLE, Florian, 74210 DOUSSARD (FR)
(74) Mandataire: Lavoix

(56) Documents cités:
- WO-A1-2021/018759
- CN-U- 208 138 665
- US-A1- 2009 121 478

## Description

La présente invention concerne un élément mâle de raccord fluidique et un raccord fluidique comprenant un tel élément mâle.

L'invention s'intéresse plus particulièrement aux raccords fluidiques rapides présentant un verrouillage automatique lors de l'accouplement entre l'élément mâle et l'élément femelle du raccord fluidique.

Il est connu de WO2021/018759 de proposer un raccord fluidique comprenant un élément mâle de raccord, comprenant un corps monobloc et une couronne. La couronne comprend une première partie monobloc avec le corps et une deuxième partie sous la forme d'une bague, rapportée autour du corps et fixée à la première partie. Les deux parties de la couronne forment plusieurs logements radiaux prévus pour accueillir des billes de verrouillage, et qui comprennent des butées externes permettant de retenir les billes dans les logements radiaux. Dans la direction longitudinale de l'élément mâle ainsi que dans les directions circonférentielles, la bague rapportée est sollicitée par les billes de verrouillage lorsque l'élément mâle est accouplé à un élément femelle. Pour résister aux efforts exercés par les billes de verrouillage, la bague rapportée doit alors être réalisée en matériau métallique, et être solidarisée à la première partie de la couronne, par exemple par soudage, par vissage ou par sertissage. En outre, lorsque la bague est sertie sur la première partie de la couronne, le sertissage n'est pas suffisant pour bloquer le mouvement de la bague par rapport au corps, et tout effort sur la bague, par exemple exercé par les billes de verrouillage, sollicite le sertissage.

Le montage de la bague sur le corps mâle d'un tel élément mâle de raccord fluidique est donc complexe à réaliser. En outre, la bague étant sollicitée lorsque le raccord fluidique est accouplé, il existe des risques de défaillance de l'élément mâle de raccord.

C'est à ces inconvénients qu'entend plus particulièrement remédier l'invention, en proposant un élément mâle de raccord fluidique dont la réalisation de la butée externe de retenue des billes de verrouillage est simplifiée, tout en garantissant la tenue et la compacité de l'élément mâle de raccord.

À cet effet, l'invention concerne un élément mâle de raccord fluidique comprenant :
- un corps mâle, centré sur un axe longitudinal, définissant une direction longitudinale avant et comprenant :
   ∘ une extension tubulaire centrée sur l'axe longitudinal, délimitant un conduit interne et présentant une face radiale externe, et
   ∘ une couronne disposée de manière fixe autour de l'extension tubulaire et présentant au moins un logement radial, chaque logement radial débouchant sur une face interne et sur une face externe de la couronne, la face interne de la couronne et la face radiale externe de l'extension tubulaire délimitant radialement entre elles un espace annulaire ;

- une bague, monopartite, montée autour de la couronne ;
- pour chaque logement radial, un élément de verrouillage dont le déplacement radialement vers l'extérieur dans le logement radial associé est limité par une butée externe formée par la bague à une jonction entre une encoche de la bague et une face externe de la bague, chaque élément de verrouillage étant mobile dans son logement radial entre :
   ∘ une position interne, dans laquelle l'élément de verrouillage fait saillie de la face interne et de la face externe de la couronne et ne fait pas saillie de la face externe de la bague, et dans laquelle le déplacement de chaque élément de verrouillage radialement vers l'intérieur dans le logement radial associé est empêché par une butée interne formée par le corps mâle, et
   ∘ une position externe, dans laquelle l'élément de verrouillage fait saillie de la face externe de la bague,
dans lequel, en configuration montée de la bague sur la couronne, le corps mâle est en regard suivant la direction longitudinale avant d'une face arrière de la bague, et la bague est en regard, suivant la direction longitudinale avant, du corps mâle, ou d'au moins un élément de verrouillage, au moins lorsque cet élément de verrouillage est en position interne.

Selon l'invention :
- chaque logement radial est délimité par une paroi intérieure appartenant à la couronne, la paroi intérieure s'étendant tout autour d'un axe central radial du logement radial ;
- la bague présente au moins une fente longitudinale, qui traverse radialement la bague et qui débouche sur la face arrière de la bague ;
- la bague comprend une portion d'extrémité élastiquement déformable, délimitée par la fente longitudinale et la face arrière de la bague ; et
- une extrémité libre de la portion d'extrémité comprend au moins une dent interne qui, en configuration montée de la bague sur la couronne, est engagée dans une rainure externe, ménagée en creux dans la face externe de la couronne.

Grâce à l'invention, la butée externe pour les éléments de verrouillage est formée sur une bague rapportée sur le corps mâle dont le montage de la bague sur le corps mâle équipé des éléments de verrouillage est simplifié et rendu plus fiable, car la portion d'extrémité de la bague permet la fixation de la bague sur la couronne par engagement de la dent interne dans la rainure externe, par exemple par encliquetage, ce qui évite avantageusement de prévoir un soudage ou un sertissage. La paroi intérieure du logement radial, en s'étendant tout autour de l'axe radial central, permet de limiter les sollicitations de la bague par les éléments de verrouillage et de limiter les sollicitations de la fixation de la bague avec le corps mâle.

Selon des aspects avantageux mais non obligatoires de l'invention, un tel élément mâle peut incorporer une ou plusieurs des caractéristiques suivantes, prises selon toute combinaison techniquement admissible :
- La portion d'extrémité de la bague est apte à se déformer élastiquement radialement à l'axe longitudinal, pour permettre le déplacement de la dent interne entre une position dégagée hors de la rainure externe et la position engagée dans la rainure externe.
- En configuration montée de la bague sur la couronne, selon chacune des deux directions circonférentielles à l'axe longitudinal, la bague est apte à venir en appui contre une face transversale de la couronne, en particulier contre une face transversale de fond plane et orthoradiale de la rainure externe.
- En configuration montée de la bague sur la couronne, la dent interne est apte à venir en butée suivant la direction longitudinale avant contre une face avant de la rainure externe.
- La bague comprend une portion distale annulaire formant une extrémité avant de la bague, chaque portion d'extrémité de la bague s'étend depuis la portion distale annulaire et est circonférentiellement délimitée par deux fentes longitudinales adjacentes, et l'extrémité libre formant chaque dent interne est une extrémité libre arrière de la portion d'extrémité.
- La face avant de la rainure externe est disposée, selon l'axe longitudinal, au même niveau que chaque logement radial.
- Une face arrière de chaque dent interne est sécante avec la face arrière de la bague et converge vers l'axe longitudinal suivant la direction longitudinale avant et la face avant de chaque rainure externe s'étend perpendiculairement à l'axe longitudinal.
- Chaque fente longitudinale de la bague forme une encoche avec butée externe.
- La rainure externe est décalée angulairement par rapport à chaque logement radial de la couronne, autour de l'axe longitudinal.
- La paroi intérieure de chaque logement radial est en intersection sur tout son contour avec une surface de diamètre constant formant la face externe de la couronne.
- Pour chaque élément de verrouillage, la butée externe est répartie autour de l'axe central radial du logement radial associé à cet élément de verrouillage.
- L'élément de verrouillage est une bille de verrouillage et une épaisseur radiale entre la face externe de la couronne et la face externe de la bague, mesurée au niveau du logement radial, est strictement inférieure à un rayon de la bille de verrouillage.
- Une partie du corps mâle délimite une face avant qui est disposée en regard, suivant la direction longitudinale avant, de la face arrière de la bague et qui s'étend au-delà de la couronne vers l'extérieur selon une direction radiale à l'axe longitudinal, et la partie du corps mâle est monobloc avec l'extension tubulaire et avec la couronne.
- La bague est en matière plastique polymère.

L'invention concerne également un raccord fluidique, comprenant un élément mâle et un élément femelle, l'élément femelle comprenant un corps femelle dans lequel est ménagée une gorge annulaire externe, et un manchon de verrouillage qui présente une face de verrouillage et qui est mobile par rapport au corps femelle, selon un axe longitudinal du corps femelle, entre une position de verrouillage dans laquelle la face de verrouillage est alignée radialement avec la gorge annulaire externe, et une position de déverrouillage, dans laquelle la face de verrouillage est décalée de la gorge annulaire externe selon l'axe longitudinal du corps femelle. Selon l'invention, l'élément mâle est tel que mentionné ci-dessus. De plus, en position de déverrouillage du manchon de verrouillage, chaque élément de verrouillage est libre de se déplacer en position externe au sein du logement radial. En outre, en configuration accouplée de l'élément mâle avec l'élément femelle, le manchon de verrouillage est en position de verrouillage, entoure la bague et recouvre radialement l'encoche pour maintenir l'élément de verrouillage dans la gorge annulaire externe du corps femelle, le corps femelle étant engagé dans l'espace annulaire.

Ce raccord fluidique présente les mêmes avantages que l'élément mâle de l'invention.

L'invention sera mieux comprise et d'autres avantages de celle-ci apparaîtront plus clairement à la lumière de la description qui va suivre de cinq modes de réalisation d'un élément mâle de raccord fluidique et d'un raccord fluidique conformes à son principe, donnée uniquement à titre d'exemple et faite en référence aux dessins, dans lesquels :
[Fig. 1] La figure 1 est une vue en perspective d'un élément mâle de raccord fluidique conforme à un premier mode de réalisation de l'invention ;
[Fig. 2] La figure 2 est une vue en perspective d'une partie de l'élément mâle de la figure 1, selon le même angle de vue ;
[Fig. 3] La figure 3 est une vue en perspective d'une autre partie de l'élément mâle de la figure 1, selon un autre angle de vue ;
[Fig. 4] La figure 4 est une coupe de l'élément mâle de la figure 1 ;
[Fig. 5] La figure 5 est une coupe de l'élément mâle des figures 1 et 4, suivant le plan de coupe V de la figure 4 ;
[Fig. 6] La figure 6 est une coupe de l'élément mâle des figures 1 et 4, suivant le plan de coupe VI de la figure 4 ;
[Fig. 7] La figure 7 est une coupe d'un élément femelle de raccord fluidique ;
[Fig. 8] La figure 8 est une coupe d'un raccord fluidique conforme à l'invention, comprenant l'élément mâle des figures 1 à 6 et l'élément femelle de la figure 7, le raccord fluidique étant dans une configuration d'accouplement ;
[Fig. 9] La figure 9 est une coupe du raccord fluidique de la figure 8, le raccord fluidique étant dans une configuration accouplée ;
[Fig. 10] La figure 10 est une vue en perspective d'un élément mâle de raccord fluidique conforme à un deuxième mode de réalisation de l'invention ;
[Fig. 11] La figure 11 est une coupe de l'élément mâle de la figure 10 ;
[Fig. 12] La figure 12 est une coupe de l'élément mâle des figures 10 et 11, suivant le plan de coupe XII de la figure 11 ;
[Fig. 13] La figure 13 est une vue en perspective d'un élément mâle de raccord fluidique conforme à un troisième mode de réalisation de l'invention ;
[Fig. 14] La figure 14 est une coupe de l'élément mâle de la figure 13 ;
[Fig. 15] La figure 15 est une coupe de l'élément mâle des figures 13 et 14, suivant le plan de coupe XV de la figure 14 ;
[Fig. 16] La figure 16 est une vue en perspective d'un élément mâle de raccord fluidique conforme à un quatrième mode de réalisation de l'invention ;
[Fig. 17] La figure 17 est une vue de côté d'une partie de l'élément mâle de la figure 16 ;
[Fig. 18] La figure 18 est une vue en coupe de l'élément mâle de la figure 16 ;
[Fig. 19] La figure 19 est une vue en perspective d'un élément mâle de raccord fluidique conforme à un cinquième mode de réalisation de l'invention ;
[Fig. 20] La figure 20 est une vue en perspective d'une partie de l'élément mâle de la figure 19 ; et
[Fig. 21] La figure 21 est une coupe de l'élément mâle de la figure 19.

Dans la description qui suit, on définit un axe longitudinal d'un élément de raccord, ou d'une partie d'un élément de raccord, comme un axe principal de cet élément, correspondant généralement à un axe selon lequel cet élément s'étend. L'axe longitudinal d'un élément est donc l'axe central de cet élément.

Lorsqu'un élément mâle de raccord fluidique et un élément femelle de raccord fluidique sont accouplés, leurs axes longitudinaux respectifs sont confondus. Ainsi, l'axe longitudinal d'un élément de raccord forme un axe d'accouplement de cet élément de raccord. L'accouplement d'un élément mâle et d'un élément femelle s'effectue par un mouvement de rapprochement de ces éléments selon leurs axes longitudinaux.

On définit une direction radiale comme étant une direction orthogonale et sécante, c'est-à-dire perpendiculaire, à un axe longitudinal. Une face radiale est une face qui s'étend autour de l'axe longitudinal. Pour un élément donné, le terme « interne » signifie « tourné vers l'axe longitudinal, selon la direction radiale de cet élément », alors que le terme « externe » signifie « tourné dans la direction opposée à l'axe central longitudinal, selon la direction radiale de cet élément ».

On définit une direction orthoradiale comme étant une direction orthogonale à un axe longitudinal et à une direction radiale et non-sécant avec l'axe longitudinal.

On définit une face orthoradiale comme étant une face parallèle à un axe longitudinal, ne comprenant pas cet axe longitudinal et perpendiculaire à une direction radiale.

On définit une direction circonférentielle à un axe longitudinal comme étant une direction circulaire autour de l'axe longitudinal et centrée sur l'axe longitudinal. En d'autres termes, lorsqu'un élément est en rotation autour d'un axe longitudinal, un point en mouvement de cet élément se déplace selon une direction circonférentielle. Il existe donc deux directions circonférentielles par rapport à un axe longitudinal, correspondant aux deux sens de rotation autour de cet axe longitudinal.

On définit aussi le côté avant, ou distal, d'un élément mâle de raccord fluidique ou d'une partie d'un élément mâle, respectivement d'un élément femelle de raccord fluidique ou d'une partie d'un élément femelle, comme le côté de cet élément mâle, respectivement de cet élément femelle, orienté selon l'axe longitudinal de cet élément dans le sens de l'accouplement, c'est-à-dire orienté vers l'élément femelle, respectivement vers l'élément mâle, lorsqu'un élément mâle et un élément femelle sont au début de l'accouplement, avant le rapprochement des éléments mâle et femelle. À l'inverse, on définit le côté arrière, ou proximal, d'un élément mâle, respectivement d'un élément femelle, comme le côté de cet élément orienté selon l'axe longitudinal de cet élément à l'opposé du sens de l'accouplement, c'est-à-dire à l'opposé de l'élément femelle, respectivement à l'opposé de l'élément mâle.

On définit une direction longitudinale avant d'un élément comme étant une direction parallèle à l'axe longitudinal de cet élément et orientée vers l'avant de cet élément.

On définit une direction longitudinale arrière d'un élément comme étant une direction parallèle à l'axe longitudinal de cet élément et orientée vers l'arrière de cet élément.

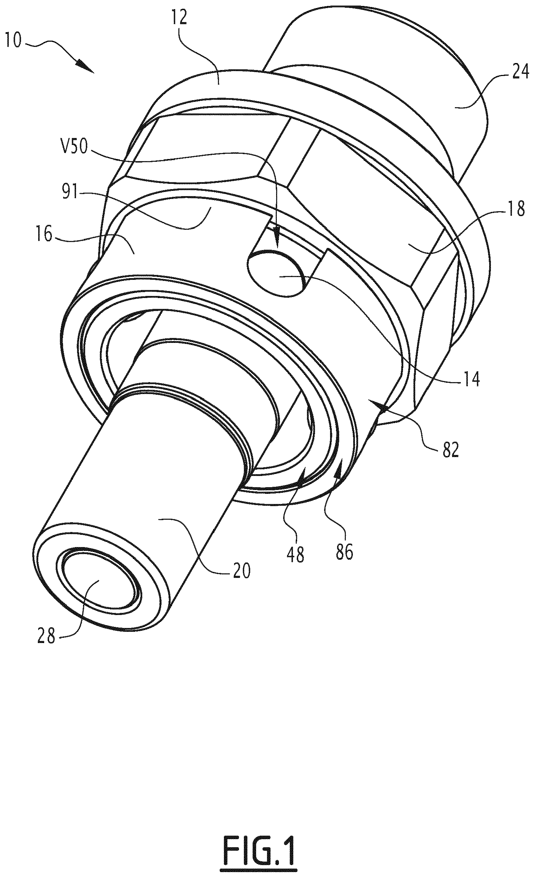

Les figures 1 à 6 représentent un élément mâle 10 de raccord fluidique conforme à un premier mode de réalisation de l'invention.

L'élément mâle 10 est prévu pour être accouplé avec un élément femelle 200 complémentaire, de sorte à former un raccord fluidique 250 appartenant, par exemple, à un circuit de refroidissement.

L'élément mâle 10 comprend un corps mâle 12, des éléments de verrouillage 14 et une bague 16. Dans l'exemple, l'élément mâle 10 comprend quatre éléments de verrouillage 14. De plus, dans l'exemple, les éléments de verrouillage 14 sont des billes de verrouillage. En variante on peut prévoir un nombre différent d'éléments de verrouillage, par exemple un seul élément de verrouillage.

À la figure 1, la bague 16 et les billes de verrouillage 14 sont représentées montées sur le corps mâle 12.

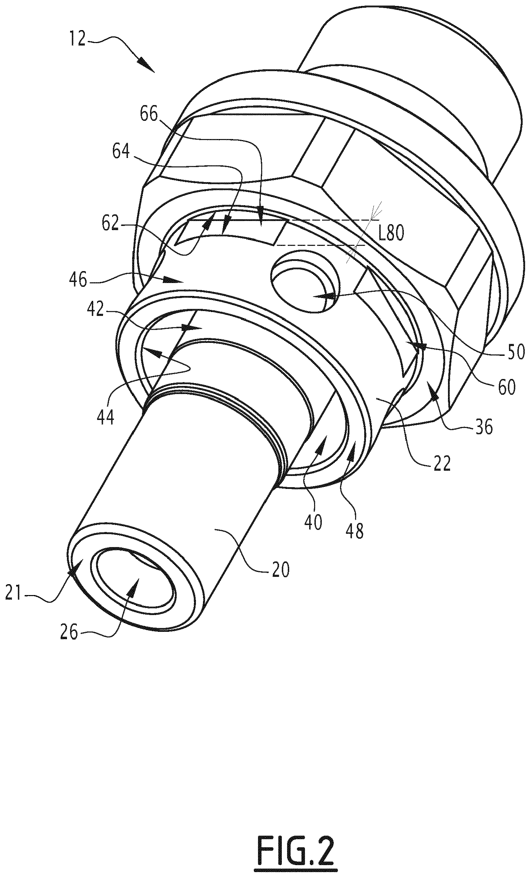

À la figure 2, seuls le corps mâle 12 est représenté.

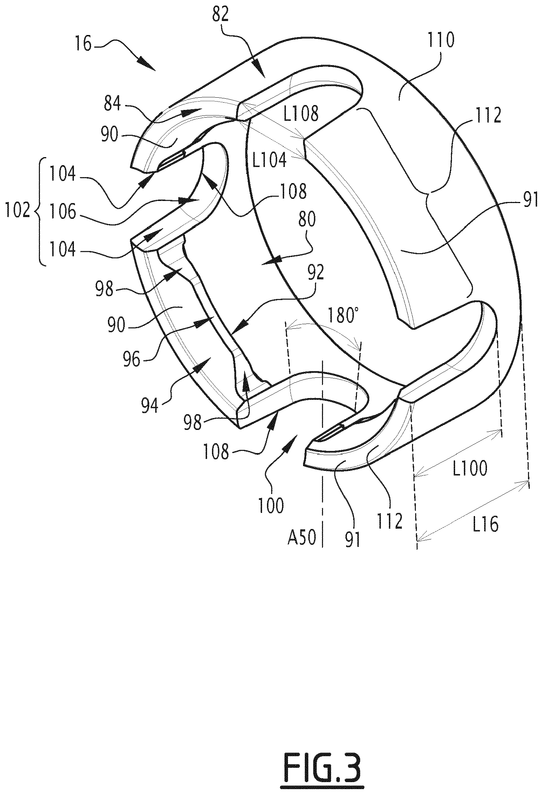

À la figure 3, seule la bague 16 est représentée.

Le corps mâle 12 comprend une partie centrale 18, une extension tubulaire 20, une couronne 22 et une partie arrière 24, qui sont monobloc, c'est-à-dire formées par une unique pièce, laquelle est d'un seul tenant. En variante non représentée, le corps mâle 12 est constitué d'une partie centrale 18, d'une extension tubulaire 20, d'une couronne 22 et d'une partie arrière 24 qui sont plusieurs parties fixées ensemble, par exemple par soudure. La couronne 22 est donc fixe par rapport à l'extension tubulaire 20. L'extension tubulaire 20 et la couronne 22 s'étendent depuis la partie centrale 18 et forment une partie avant du corps mâle 12. De préférence, la partie monobloc du corps mâle 12, c'est-à-dire la partie centrale 18, l'extension tubulaire 20, la couronne 22 et la partie arrière 24, est réalisée en métal, comme par exemple en aluminium ou en laiton.

L'extension tubulaire 20 et la couronne 22 sont disposés au niveau du côté distal du corps mâle 12 et la partie arrière 24 est disposée au niveau du côté proximal du corps mâle.

On note « 21 » l'extrémité distale de l'extension tubulaire 20, qui correspond à la partie la plus en avant de l'élément mâle 10.

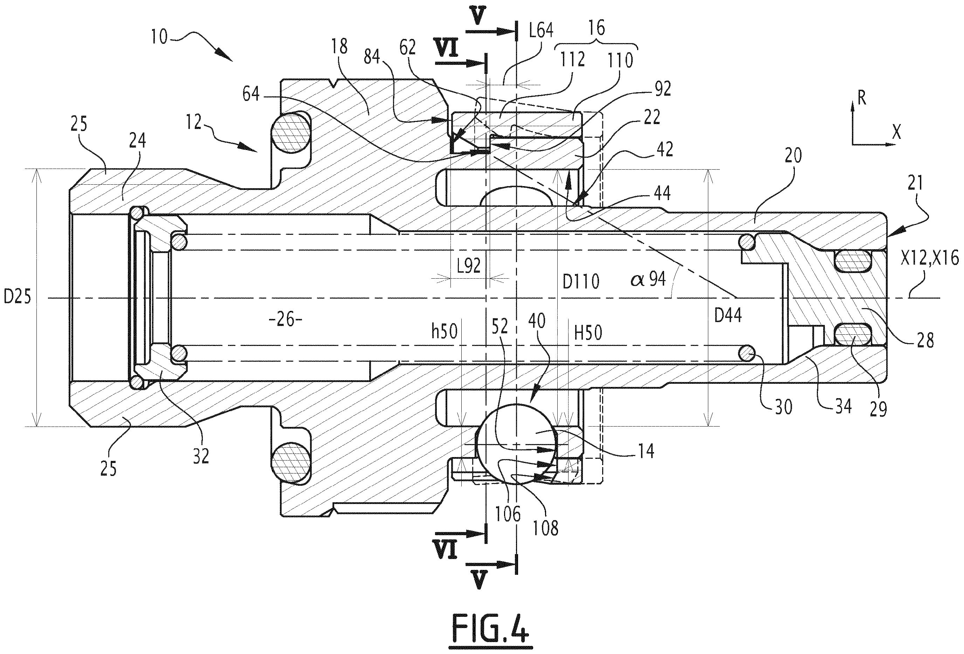

Avantageusement, l'extérieur de la partie arrière 24 porte un filetage 25, de façon à pouvoir être assemblé à une canalisation non-représentée. En pratique, le filetage 25 est porté par une partie cylindrique de la partie arrière 24. Le filetage 25 est représenté uniquement à la figure 4.

On note « D25 » le diamètre extérieur du filetage 25, mesuré dans une direction radiale du corps mâle 12.

Comme mieux visible à la figure 4, le corps mâle 12 est creux et délimite un conduit interne 26 traversant. Le conduit interne 26 débouche d'une part au centre de la partie arrière 24 et d'autre part au centre de l'extension tubulaire 20.

On définit un axe longitudinal X12 du corps mâle 12 comme étant un axe selon lequel le conduit interne 26 et l'extension tubulaire 20 s'étendent. De manière générale, le corps mâle 12 s'étend selon l'axe longitudinal X12.

De manière générale, dans la suite de la description, et sauf mention contraire, les termes « axial », « radial », « orthoradial » et « circonférentiel » se rapportent à l'axe longitudinal X12.

La direction longitudinale avant du corps mâle 12 est représentée, uniquement à la figure 4, par une flèche notée « X ».

Une direction radiale à l'axe longitudinal X12 du corps mâle 12 est représentée, uniquement à la figure 4, par une flèche notée « R ».

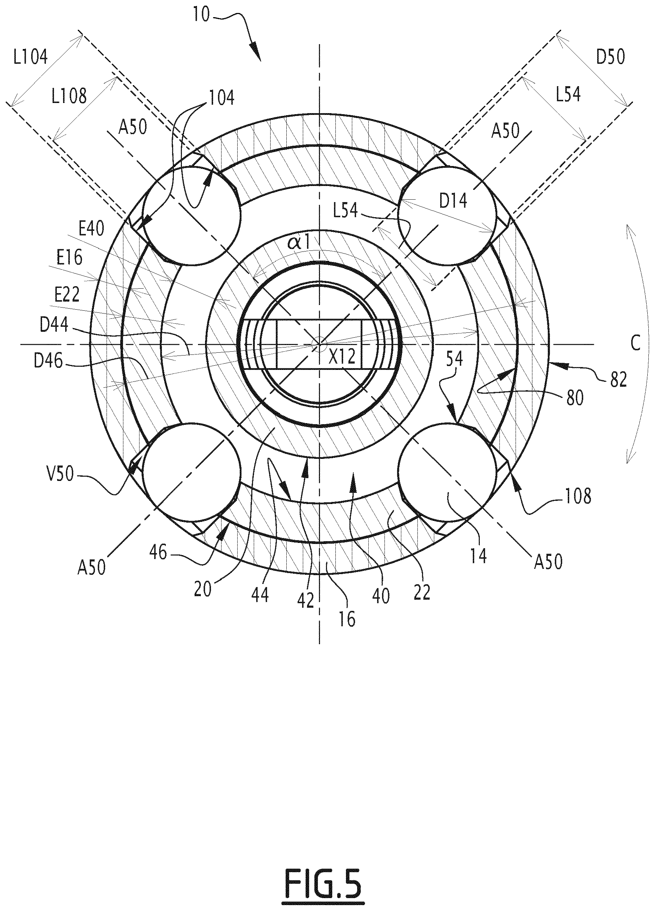

Les deux directions circonférentielles à l'axe longitudinal X12 du corps mâle 12 sont représentées, uniquement à la figure 5, par une double flèche notée « C ».

L'élément mâle 10 comprend également une soupape 28, logée dans l'extrémité distale du conduit interne 26, c'est-à-dire logée dans l'extension tubulaire 20, et mobile dans le corps mâle 12 selon l'axe longitudinal X12 entre une position avancée de fermeture étanche du conduit interne 26 et une position reculée d'ouverture du conduit interne. À la figure 2, la soupape 28 n'est pas représentée.

La soupape 28 comprend un joint d'étanchéité 29, en contact radial avec l'extension tubulaire 20 lorsque la soupape est en position de fermeture étanche du conduit interne 26, de sorte à assurer l'étanchéité de la fermeture du conduit interne 26 par la soupape.

Le corps mâle 12 comprend un ressort de soupape 30, qui exerce un effort sur la soupape 28, par rapport à la partie monobloc du corps mâle et selon l'axe longitudinal X12, tendant à repousser la soupape vers sa position avancée de fermeture étanche.

Le ressort de soupape 30 s'étend donc le long de l'axe longitudinal X12. Son extrémité distale est en appui contre la soupape 28 et son extrémité proximale est en appui contre une bague d'arrêt 32, la bague d'arrêt 32 étant retenue dans la partie monobloc du corps mâle.

Le corps mâle 12 comprend également une butée 34, qui s'étend dans le conduit interne 26 et qui empêche le déplacement de la soupape 28 dans la direction longitudinale avant X au-delà de sa position de fermeture étanche.

L'extension tubulaire 20 et la couronne 22 s'étendent toutes deux depuis la partie centrale 18 vers l'extrémité distale du corps mâle 12, selon l'axe longitudinal X12. En pratique, la couronne 22 s'étend depuis une face avant 36 de la partie centrale 18 du corps mâle 12. La face avant 36 est plane et axiale, c'est-à-dire qu'elle est perpendiculaire à l'axe longitudinal X12. En outre, selon une direction radiale du corps mâle 12, la face avant 36 s'étend au-delà de la couronne 22 vers l'extérieur. En d'autres termes, sur la figure 2, la face avant 36 est apparente et s'étend tout autour de la couronne 22.

De plus, la couronne 22 est située à distance de l'extension tubulaire 20, selon une direction radiale du corps mâle 12, en étant plus éloignée de l'axe longitudinal que l'extension tubulaire. Ainsi, le corps mâle 12 comprend un espace annulaire 40, ménagé entre l'extension tubulaire 20 et la couronne 22, qui forme un chambrage. La couronne est donc située autour de l'extension tubulaire.

L'espace annulaire 40, ou chambrage, est donc formé entre une face radiale externe 42 de l'extension tubulaire 20, c'est-à-dire une face externe de l'extension tubulaire, et une face radiale interne 44 de la couronne 22, c'est-à-dire une face interne de la couronne.

La face radiale externe 42 de l'extension tubulaire 20 et la face radiale interne 44 de la couronne 22 sont définies par des cylindres droits ayant chacun un diamètre constant et étant chacun centrés sur l'axe longitudinal X12.

De plus, dans une direction radiale, la couronne 22 est délimitée par une face radiale externe 46, qui est également définie par un cylindre droit de diamètre D46 constant centré sur l'axe longitudinal X12. Ainsi, le diamètre D46 de la face radiale externe 46 est constant.

Selon l'axe longitudinal X12, la couronne 22 est délimitée à son extrémité distale par une face avant 48, parallèle à la face axiale 36 de la partie centrale 18.

L'épaisseur radiale de la couronne 22, notée « E22 », c'est-à-dire la distance entre la face interne 44 et la face externe 46 de la couronne, mesurée selon un axe radial à l'axe longitudinal X12, est constante, depuis la face axiale 36 de la partie centrale 18 jusqu'à la face avant 48 de la couronne.

On note « D44 » le diamètre de la face radiale interne 44, mesuré dans une direction radiale du corps mâle 12.

Avantageusement, le diamètre D44 de la face radiale interne 44 est sensiblement égal au diamètre D25 du filetage 25. Par « sensiblement égal », on entend que le diamètre D44 est égal au diamètre D25 à plus ou moins 10%.

La couronne 22 est percée de logements radiaux 50 pour accueillir les billes de verrouillage 14. Dans l'exemple, l'élément mâle 10 comprenant quatre billes de verrouillage 14, la couronne 22 est percée de quatre logements radiaux 50.

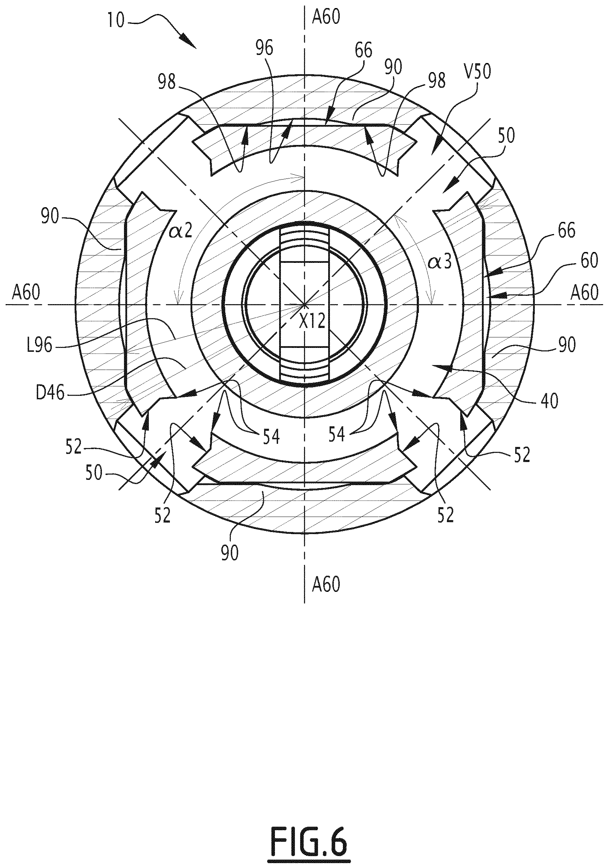

Les logements radiaux 50 sont mieux visibles sur les figures 5 et 6.

Chaque logement radial 50 traverse la couronne 22 de part en part, entre sa face interne 44 et sa face externe 46.

Chaque logement radial 50 est délimité par une paroi intérieure 52 cylindrique centrée sur un axe central radial A50 et par une butée interne 54 formée à la jonction du logement radial et de la face interne 44 de la couronne 22. Ainsi, la paroi intérieure 52 de chaque logement radial est en intersection sur tout son contour avec la surface de diamètre D46 constant formant la face externe 46 de la couronne.

De plus, la paroi intérieure 52 de la couronne 22 formant un logement radial 50 s'étend tout autour de l'axe central radial A50 de ce logement radial. En d'autres termes, la paroi intérieure 52 de la couronne 22 est une paroi fermée. En particulier, l'intersection entre un logement radial et la face interne 44 de la couronne 22 a un contour fermé disposé tout autour de l'axe central radial A50 de ce logement radial.

On note « D50 » le diamètre de chaque logement radial 50, mesuré perpendiculairement à l'axe radial A50 de ce logement, le diamètre D50 correspondant au diamètre de la paroi intérieure cylindrique 52.

La butée interne 54 d'un logement radial 50 s'étend depuis la paroi intérieure cylindrique 52 de ce logement radial vers l'intérieur du logement radial, c'est-à-dire que, au niveau de la butée interne 54, le logement radial est partiellement refermé. On note « L54 » la largeur minimale d'une encoche 100, mesurée au niveau de la butée interne 54, la largeur minimale L54 étant mesurée perpendiculairement à l'axe A50. La largeur L54 est donc inférieure au diamètre D50, comme mieux visible à la figure 5.

On note « D14 » le diamètre d'une bille de verrouillage 14 et « R14 » son rayon. Avantageusement, le diamètre D14 est compris entre la largeur L54 et le diamètre D50. Ainsi, lorsqu'une bille de verrouillage est disposée dans un logement radial 50, cette bille est retenue dans le logement radial 50 par la butée interne 54, qui limite son déplacement vers l'espace annulaire 40.

En section dans un plan passant par l'axe radial A50 de chaque logement radial 50 et par l'axe longitudinal X12, la hauteur radiale distale d'un logement radial 50, notée « H50 », est égale à sa hauteur radiale proximale, notée « h50 ». En d'autres termes, la distance entre la face interne 44 et la face externe 46 de la couronne 22, mesurée dans une direction radiale, est égale de part et d'autre des logements radiaux 50, selon l'axe longitudinal X12.

Dans une direction orthoradiale, les logements radiaux 50 sont régulièrement répartis sur la couronne 22, c'est-à-dire que l'angle formé entre deux axes centraux radiaux A50 de deux logements radiaux adjacents, noté « α1 », est constant. Dans l'exemple, la couronne comprenant quatre logements radiaux, l'angle α1 entre deux axes centraux radiaux A50 adjacents est égal à 90°.

La couronne 22 comprend des rainures externes 60, dans l'exemple quatre rainures externes, creusées à partir de la face externe 46 de la couronne, en particulier à partir de la surface cylindrique de diamètre D46 et s'étendant chacune dans une direction orthoradiale. Ainsi chaque rainure externe 60 ne débouche pas sur une surface de la couronne 22 tournée selon la direction longitudinale avant X. En particulier chaque rainure externe 60 ne débouche pas sur la face avant 48 de la couronne. En particulier, chaque rainure externe 60 débouche de la couronne 22 uniquement dans la direction orthoradiale. Selon l'axe longitudinal X12, les quatre rainures externes 60 sont disposées au même niveau. Les deux extrémités circonférentielles de chaque rainure externe 60 sont disposées au même niveau selon l'axe longitudinal X12.

Chaque rainure externe 60 comprend une face arrière 62 et une face avant 64 qui sont planes et axiales, c'est-à-dire qui sont perpendiculaires à l'axe longitudinal X12. Les faces arrière 62 et avant 64 sont donc parallèles entre elles et parallèles à la face axiale 36 de la partie centrale 18. La face arrière axiale 62 est orientée dans la direction longitudinale avant X tandis que la face avant axiale 64 est orientée à l'opposé de la direction longitudinale avant X. La face avant axiale 64 s'étend sur toute la largeur de la rainure externe 60 prise selon la direction orthoradiale de la rainure externe 60.

Selon l'axe longitudinal X12, la face arrière 62 est disposée longitudinalement en arrière des logements radiaux 50 et la face avant 64 est disposée longitudinalement au niveau des logements radiaux, tout en étant disposée en arrière de l'axe radial A50 des logements radiaux. Selon l'axe longitudinal X12, chaque rainure externe 60 s'étend donc au moins partiellement à un niveau longitudinal occupé par les logements radiaux 50.

Mesurée selon l'axe longitudinal X12, la longueur longitudinale entre la face avant axiale 64 des rainures 60 et l'axe radial central A50 des logements radiaux 50, notée « L64 », est donc inférieure au rayon des logements radiaux, c'est-à-dire à la moitié du diamètre D50. De préférence, la longueur L64 est supérieure à 0,5 fois le rayon des logements radiaux, de préférence encore supérieure à 0,75 fois le rayon des logements radiaux.

Chaque rainure externe 60 comprend une face transversale de fond 66. La face transversale de fond 66 de chaque rainure externe est une face plane orthoradiale à l'axe longitudinal X12. Ainsi, la face transversale de fond 66 est perpendiculaire aux faces arrière 62 et avant 64.

Pour chaque rainure 60, on définit un axe radial central A60 comme étant un axe radial à l'axe longitudinal X12 et passant par le centre de la face transversale de fond 66 de la rainure, c'est-à-dire passant par le point de la face transversale de fond 66 étant le plus proche de l'axe longitudinal X12. La face transversale de fond 66 d'une rainure 60 est donc perpendiculaire à l'axe radial central A60 de cette rainure.

Comme mieux visible à la figure 6, dans un plan perpendiculaire à l'axe longitudinal X12 et parallèle aux axes centraux radiaux A50, les rainures externes 60 sont régulièrement réparties sur la couronne 22 autour de l'axe X12, c'est-à-dire que l'angle formé entre deux axes centraux radiaux A60 de deux rainures externes 60 adjacentes, noté « α2 », est constant. Dans l'exemple, la couronne comprenant quatre logements radiaux, l'angle α2 entre deux axes centraux radiaux A60 adjacents est égal à 90°.

De plus, chacune des rainures externes 60 est décalée angulairement des logements radiaux 50 autour de l'axe X12, c'est-à-dire que l'amplitude angulaire de chaque rainure externe 60 autour de l'axe X12 ne recouvre pas l'amplitude angulaire occupée par chaque logement radial 50 autour de l'axe X12. En particulier, l'angle formé entre l'axe central radial A60 d'une rainure externe 60 et l'axe central radial A50 d'un logement radial 50 adjacent, noté « α3 », est non-nul. Dans l'exemple, les rainures externes 60 sont réparties de manière homogène entre les logements radiaux 60, et l'angle α3 est ainsi égal à 45°. En d'autres termes, chaque rainure externe 60 est disposée à égale distance de deux logements radiaux 50, dans une direction orthogonale.

La bague 16 est monopartite. La bague est montée autour de la couronne 22 du corps mâle 12 et autour des billes de verrouillage 14.

Avantageusement, la bague 16 est réalisée en matière plastique polymère, comme par exemple en matériau de la famille des polyacétals. De préférence, la bague 16 est fabriquée par injection.

Avantageusement, la bague est réalisée dans un matériau coloré, dont la couleur correspond à un repérage couleur porté par un élément femelle de raccord.

La bague 16 comprend une face interne 80, une face externe 82, une face arrière 84 et une face avant 86. La face avant 86 est formée sur l'extrémité avant de la bague 16. La face arrière 84 est formée sur l'extrémité arrière de la bague 16.

Lorsque la bague 16 est montée autour de la couronne 22, les faces interne 80 et externe 82 sont définies par des cylindres droits de diamètre constant, c'est-à-dire qu'elles sont parallèles entre elles et qu'elles s'étendent selon un axe longitudinal X16 de la bague 16. Ainsi, l'épaisseur radiale de la bague 16, notée « E16 », c'est-à-dire la distance entre la face interne 80 et la face externe 82, mesurée selon un axe radial à l'axe longitudinal X16, est constante. En particulier, lorsque la bague 16 est montée autour de la couronne 22, la face externe 82 est de diamètre externe constant sur toute la longueur L16 de la bague 16.

Les faces arrière 84 et avant 86 sont axiales, c'est-à-dire qu'elles sont perpendiculaires à l'axe longitudinal X16. Ainsi, les faces arrière et avant sont parallèles entre elles.

Lorsque la bague 16 est montée autour de la couronne 22, les axes longitudinaux X12 et X16 sont confondus et la face interne 80 de la bague est disposée autour de la face externe 46 de la couronne. La bague 16 et la couronne 22 sont prévues pour qu'un jeu radial réduit soit présent entre la face interne de la bague et la face externe de la couronne. En d'autres termes, les faces interne de la bague et externe de la couronne coopèrent, au jeu de fonctionnement près.

En configuration montée de la bague 16 sur le corps mâle 12, la face arrière 84 est en regard du corps mâle 12, selon l'axe longitudinal X12. Plus précisément, la face arrière 84 est en regard de la face avant 36 de la partie centrale 18 du corps mâle. En variante non représentée, la face arrière 84 est en regard de la face arrière 62 de chaque rainure externe 60.

La bague 16 comprend des dents internes 90, dans l'exemple quatre dent internes 90. Chaque dent interne s'étend depuis la face interne 80 de la bague en direction de l'axe longitudinal X16, en étant située au niveau de la face arrière 84 de la bague. En d'autres termes, chaque dent interne 90 est portée par une extrémité libre arrière 91 de la bague 16.

Chaque dent interne 90 définit une face avant 92, une face arrière 94 et une face interne 96.

La face avant 92 de chaque dent 90 est plane, et avantageusement orthogonale à l'axe longitudinal X16.

La face arrière 94 de chaque dent 90 est plane, tournée à l'opposé de la direction longitudinale avant X et avantageusement inclinée par rapport à l'angle longitudinal X16 d'un angle α94. De préférence, l'angle α94 est compris entre 15° et 45°, de préférence égal à 30°, en configuration montée de la bague 16 et converge vers l'axe X12 suivant la direction longitudinale avant X. En d'autres termes, chaque face arrière 94 converge vers l'axe longitudinal X12 suivant la direction longitudinale avant X. Ainsi, les faces arrière 94 sont évasées vers l'arrière de la bague 16. La face arrière 94 de chaque dent interne 90 est sécante avec la face arrière 84 de la bague 16.

La face interne 96 de chaque dent 90 comprend deux portions de faces 98. Les deux portions de faces 98 sont coplanaires et orthoradiales à l'axe longitudinal X16, en particulier perpendiculaires à l'axe A60 de la rainure externe 60 considérée.

Avantageusement, la longueur minimale entre l'axe longitudinal X16 et la face interne 96 de chaque dent interne 90, notée « L96 » et mesurée selon un axe radial à l'axe longitudinal X16, est inférieure au rayon de la face externe 46 de la couronne 22, c'est-à-dire inférieure à la moitié du diamètre D46.

La longueur entre la face avant 92 d'une dent interne 90 et la face arrière 84 de la bague 16, notée « L92 », est inférieure à la longueur des rainures externes 80 ménagées dans la couronne 22, notée « L80 », les longueurs étant mesurées selon les axes longitudinaux X12 et X16.

En configuration montée de la bague 16, les dents internes 90 sont engagées dans les rainures externes 60.

Des encoches 100 sont ménagées en creux dans la bague 16. Dans l'exemple, la bague comprend quatre encoches. Les encoches 100 sont également appelées « fentes ».

Dans le premier mode de réalisation, les encoches 100 prennent la forme de fentes longitudinales qui, selon l'axe longitudinal X16, débouchent sur la face arrière 84 de la bague 16 et ne débouchent pas sur la face avant 86 de la bague et qui traversent radialement la bague de part en part depuis la face interne 80 jusqu'à la face externe 82. Ainsi, les encoches 100 sont radialement traversantes, en particulier au niveau de la face arrière 84 de la bague.

Les encoches 100 et la face arrière 84 de la bague délimitent les extrémités libres arrières 91 de la bague.

De préférence, les encoches s'étendent depuis la face arrière 84, selon l'axe longitudinal X16, sur une longueur maximale L100 comprise entre 65% et 90% de la longueur L16 de la bague 16, de préférence encore sur 80% de la longueur de la bague.

Les encoches 100 sont délimitées par une paroi intérieure 102 de la bague 16. La paroi intérieure 102 d'une encoche comprend deux faces planes 104 et parallèles entre elles et une face courbe 106 en portion de cylindre qui relie les deux faces planes 104.

Les faces planes 104 sont en intersection avec la face arrière 84 de la bague.

La face courbe 106 forme le fond de l'encoche 100, c'est-à-dire que la face courbe est située au niveau de l'extrémité avant de l'encoche.

La paroi intérieure 102 d'une encoche 100 est symétrique par rapport à un plan médian radial parallèle aux faces planes 104 et passant par le centre de la face courbe 106.

Chaque encoche 100 comprend une butée externe 108, formée à la jonction de la paroi intérieure 102 de l'encoche avec la face externe 82 de la bague 16. Ainsi, la butée externe 108 d'une encoche s'étend sur tout le contour de l'encoche, en particulier au niveau de la jonction de la face courbe 106 de la paroi intérieur 102 avec la face externe 82 de la bague 16.

Lorsque la bague 16 est montée sur le corps mâle 12 autour de la couronne 22, les encoches 100 de la bague sont alignées avec les logements radiaux 50 de la couronne, selon une direction orthoradiale aux axes longitudinaux X12 et X16. Chaque encoche 100 est donc associée à un logement radial 50. En d'autres termes, chaque encoche est partiellement disposée en regard radial d'un logement radial. De plus, la face courbe 106 des encoches est avantageusement alignée avec la paroi intérieure cylindrique 52 des logements radiaux, comme mieux visible sur les figures 4 et 5. En d'autres termes, la face courbe 106 de chaque encoche est centrée sur un axe radial A50 et s'étend sur 180° autour de l'axe radial A50. Ainsi, la butée externe 108 d'une encoche 100 est répartie sur 180° autour de l'axe radial A50 de ce logement radial. La butée externe 108 s'étend alors de part et d'autre d'un plan passant par l'axe longitudinal X12 et par l'axe radial A50 de ce logement radial. La butée externe 108 d'une encoche 100 correspond donc à un secteur angulaire de 180°. À la figure 3, où seule la bague 16 est montrée, la position que prendrait un axe radial A50 en configuration montée de la bague sur la couronne 22 est représentée, à titre d'illustration. Ainsi, la butée externe 108 de chaque encoche fait saillie à partir de la paroi intérieure 102 de l'encoche en direction de l'axe central radial A50 du logement radial associé.

La paroi intérieure 102 d'une encoche est décalée radialement de la paroi intérieure 52 du logement radial 50 associé de la couronne 22 selon l'axe central radial A50 dans la mesure où la paroi intérieure 102 de l'encoche ne s'étend pas au même niveau radial que la paroi intérieure 52 et donc ne fait pas face à la paroi intérieure 52 du logement radial selon toute direction prise perpendiculairement à l'axe A50 du logement radial 50.

On note « L104 » la largeur minimale d'une encoche 100, mesurée entre ses deux faces planes 104 et correspondant au diamètre de la face courbe 106, et « L108 » la largeur minimale d'une encoche 100, mesurée au niveau de la butée externe 108, la largeur minimale L108 étant mesurée perpendiculairement à l'axe A50 au niveau du logement radial 50.

Avantageusement, la largeur L104 est sensiblement égale au diamètre D50. En d'autres termes, le diamètre de la face courbe 106 d'une encoche est sensiblement égal au diamètre des logements radiaux 50. En outre, la largeur L104 est sensiblement égale ou supérieure au diamètre D14.

Avantageusement, la largeur L108 est sensiblement égale à la largeur L54, et inférieure au diamètre D14.

Avantageusement, l'épaisseur radiale E16 de la bague 16 est inférieure à la largeur L104 des encoches 100, de préférence inférieure à 50% de la largeur L104, de préférence encore inférieure à 35% de la largeur de l'encoche.

Un logement radial 50 de la couronne 22 et l'encoche 100 qui lui est associée forment ensemble un volume de réception V50 d'une bille de verrouillage 14.

Lorsqu'une bille de verrouillage 14 est montée dans un volume de réception V50, la bille de verrouillage est mobile radialement à l'axe longitudinal X12, parallèlement à l'axe A50, entre une position externe de déverrouillage et une position interne de verrouillage.

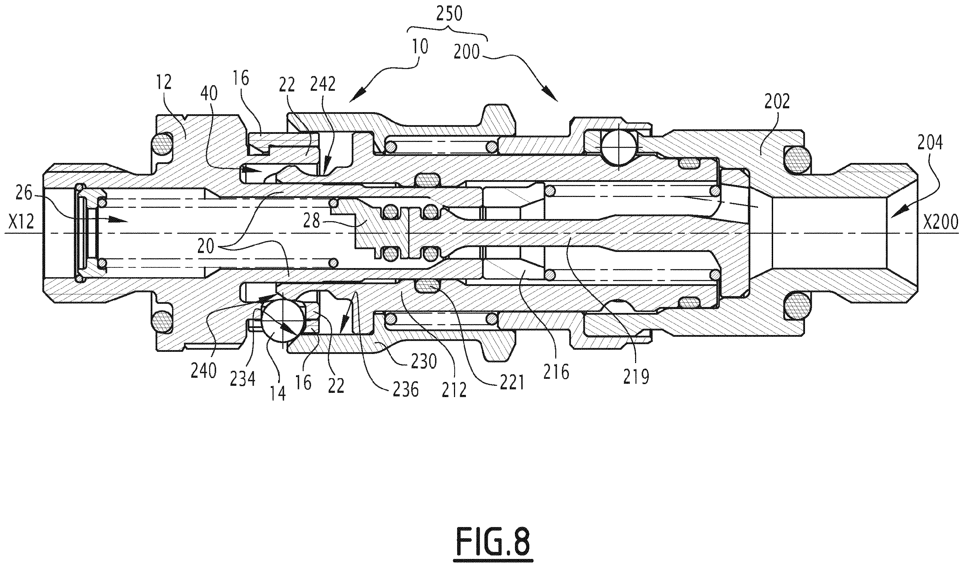

En position externe, comme visible sur la figure 8, la bille de verrouillage 14 fait partiellement saillie de la face radiale externe 82 de la bague 16. De plus, en position externe, la bille de verrouillage est en butée contre la butée externe 108 de l'encoche 100. Ainsi, en configuration montée de la bague 16 sur le corps mâle 12, la butée externe 108 empêche le déplacement de la bille de verrouillage vers l'extérieur, en particulier au-delà de sa position externe de déverrouillage, de manière que la bille de verrouillage ne peut sortir totalement hors du logement radial 50 par la face externe 46. En d'autres termes, la butée externe 108 limite le déplacement de la bille de verrouillage 14 radialement vers l'extérieur alors que la bille de verrouillage 14 est dans le logement radial 50.

En position interne, la bille de verrouillage fait partiellement saillie de la face interne 44 de la couronne 22 dans l'espace annulaire 40 mais ne fait pas saillie de la face externe 82 de la bague 16. En outre, dans cette position, la bille de verrouillage fait partiellement saillie de la face externe 46 de la couronne. En pratique, en position interne, la bille de verrouillage affleure avec la face externe 82 de la bague, comme visible sur la figure 5. De plus, en position interne, la bille de verrouillage est en butée contre la butée interne 54 du logement radial 50, de sorte à ne pas pouvoir se rapprocher davantage des axes longitudinaux X12 et X16.

Ainsi, les butées interne 54 et externe 108 forment des resserrements de retenue radiale des billes de verrouillage dans leur logement radial 50 et dans leur volume de réception V50. La butée interne 54 est formée exclusivement sur le corps mâle 12. La butée externe 108 est formée exclusivement sur la bague 16.

La paroi intérieure cylindrique 52 du logement radial 50 guide le mouvement radial de la bille de verrouillage 14 dans le volume de réception V50 entre ses positions interne et externe.

La bague 16 comprend une portion distale annulaire 110. En pratique, la portion distale annulaire de la bague s'étend longitudinalement selon l'axe X16 depuis la face avant 86 de la bague jusqu'au niveau du fond des encoches 100, c'est-à-dire jusqu'aux faces courbes 106 des encoches. En d'autres termes, la portion distale annulaire 110 constitue l'extrémité avant de la bague 16. En d'autres termes, la face courbe 106 en portion de cylindre de chaque encoche 100 est tangente avec la portion distale annulaire de la bague, selon l'axe longitudinal X16.

La bague 16 comprend des languettes 112, qui correspondent chacune à une portion d'extrémité de la bague, et en particulier, dans l'exemple du premier mode de réalisation, à une portion d'extrémité axiale proximale. Les languettes s'étendent depuis la portion distale annulaire 110 et sont délimitées chacune circonférentiellement par deux encoches longitudinales 100 adjacentes et longitudinalement par la face arrière 84 de la bague. Les languettes 112 constituent des portions flexibles de la bague qui sont élastiquement déformables relativement à la portion distale annulaire 110.

En pratique, chaque dent interne 90 est portée par une languette 112. Les extrémités libres arrières 91 correspondent donc aux extrémités axiales des languettes, et chaque languette comportent donc chacune une dent interne 90 qui fait saillie radialement vers l'intérieur depuis la face cylindrique interne 80 de la bague 16. Ainsi au niveau de chaque dent interne, l'épaisseur radiale de la languette 112 est supérieure à l'épaisseur radiale du reste de la languette, en particulier supérieure à l'épaisseur radiale de la languette au niveau longitudinal du fond de l'encoche 100. En d'autres termes, chaque dent interne 90 est portée par une extrémité libre arrière 91 d'une languette 112.

La longueur L92 est inférieure à la moitié de la longueur L100. Les dents 90 sont donc disposées à l'extrémité arrière des languettes 112.

La largeur circonférentielle des languettes 112, et la longueur maximale de chacune de ces languettes, mesurée selon l'axe longitudinal X16, entre la face arrière 84 et la face courbe 106 sont bien supérieures, c'est-à-dire au moins quatre fois supérieures, à l'épaisseur radiale E16 de la bague.

La portion distale annulaire 110 forme la face avant de la bague. Le diamètre interne de la portion distale annulaire, noté « D110 », est égal, au jeux radiaux de fonctionnement près, au diamètre D46 de la face externe 46 de la couronne 22, pour montage à jeu radial réduit de la portion distale annulaire 110 autour de la couronne 22.

La face avant 48 de la couronne et la face avant 86 de la bague sont affleurantes, selon l'axe longitudinal X12.

Préalablement au montage de la bague 16 sur la couronne 22, une bille de verrouillage 14 est introduite dans chaque logement radial 50 depuis la face externe 46 de la couronne.

Le montage de la bague 16 sur la couronne 22, s'effectue par clipsage, au cours d'un mouvement de translation selon les axes longitudinaux X12 et X16 de l'avant vers l'arrière. En pratique, au cours de ce clipsage, les languettes 112 sont élastiquement déformées, en particulier dans une direction radiale aux axes longitudinaux, autour de la couronne.

Le montage de la bague 16 sur la couronne 22 s'effectue donc tout d'abord en alignant la bague avec la couronne, c'est-à-dire en positionnant la bague de sorte que son axe longitudinal X16 soit confondu avec l'axe longitudinal X12, puis en positionnant les faces arrières 94 des dents internes 90 en regard longitudinal de la face avant 48 de la couronne, et en positionnant les encoches 100 en regard longitudinal des billes de verrouillage 14.

Ensuite, la bague 16 est rapprochée longitudinalement de la couronne 22, dans un mouvement de montage de la bague dirigé vers l'arrière du corps mâle 12, de sorte que la face arrière inclinée 94 de chaque dent interne 90 vienne au contact de la face avant 48 de la couronne et soit écartée par la couronne, par une déformation radiale externe élastique des languettes 112, les faces internes 96 des dents glissant sur la face externe 46 de la couronne jusqu'à ce que les dents internes parviennent en regard radial des rainures externes 60 de la couronne sur toute leur longueur L92. À cette étape du montage, un ajustement angulaire de la bague peut être nécessaire pour aligner les encoches de la bague avec les logements radiaux 50 de la couronne, et donc les dents internes avec les rainures externes. Les dents internes se referment alors élastiquement dans les rainures externes, de sorte que les faces avant planes 92 des dents s'étendent alors dans un plan perpendiculaire à l'axe longitudinal X12.

Ainsi pour le montage de la bague 16 sur le corps mâle 12, chaque dent interne 90 est mobile radialement vers l'intérieur d'une position dégagée hors de la rainure externe 60 à une position engagée dans la rainure externe 60. Les dents internes 90 en position dégagée s'étendent au-delà de la face externe 46 de la couronne 22 vers l'extérieur radialement à l'axe X12.

À la figure 4, la bague 16 est représentée de manière schématique, en traits pointillés, dans une position en cours de rapprochement de la couronne, c'est-à-dire dans une position où les languettes 112 sont élastiquement déformées et où les faces internes 96 des dents 90 glissent sur la face externe 46 de la couronne 22. Chaque dent interne 90 est alors en position dégagée.

Au cours de ce mouvement de rapprochement, et grâce au fait que la largeur L104 des encoches 100 est sensiblement égale ou supérieure au diamètre D14 des billes de verrouillage 14, la bague 16 se met en place autour des billes de verrouillage, et n'applique donc aucun effort sur les billes. À l'issu de ce mouvement de rapprochement, la face avant 92 de chaque dent interne 90 est alors en regard, dans la direction longitudinale vers l'avant, de la face avant axiale 64 délimitant l'une des rainures externes 60.

Le mouvement de la bague 16 vers l'avant par rapport au corps mâle 12 est limité par la mise en butée des faces avant 92 des dents internes 90 contre les faces avant axiales 64 des rainures externes 60. Cette limitation du mouvement longitudinal de la bague permet donc de positionner longitudinalement les butées externes 108 des encoches 100 vis-à-vis des logements radiaux 50. De plus, cette mise en butée des dents internes de la bague contre les faces avant 64 des rainures externes ne crée aucune composante radiale qui pourrait conduire au déclipsage de la bague, ce qui permet d'éviter tout déclipsage accidentel de la bague.

Un léger jeu axial, c'est-à-dire selon l'axe longitudinal X12, des dents internes 90 dans les rainures externes 60 est nécessaire pour permettre le clipsage des dents dans les rainures externes et ne pas contraindre les billes de verrouillage 14. Chaque encoche 100 est en regard d'une bille de verrouillage 14 dans la direction longitudinale vers l'arrière au moins lorsque la bille de verrouillage 14 est en position interne. Le mouvement de la bague 16 vers l'arrière par rapport au corps mâle 12 est limité par la mise en butée des encoches avec les billes de verrouillage, elles-mêmes retenues dans leur logement radial 50 par les butées externes 108 des encoches.

En pratique, dans l'exemple, le mouvement longitudinal de la bague 16 par rapport au corps mâle 12 est limité à 0,25 mm, soit 5% de la longueur L16 de la bague.

La face interne 96 de chaque dent interne 90 est en regard de la face transversale de fond 66 d'une des rainures externes 60, dans les deux directions circonférentielles C à l'axe longitudinal X12. En d'autres termes, et comme mieux visible à la figure 6, chaque portion de faces coplanaires 98 est en regard de la face transversale de fond 66 dans l'une seulement des deux directions circonférentielles. Cette coopération entre les faces internes 96 et les faces transversales de fond 66 permet de positionner angulairement la bague 16 sur la couronne 22, c'est-à-dire de limiter le mouvement relatif circonférentiel de la bague par rapport à la couronne, par exemple à moins de 5° autour de l'axe longitudinal X16. Ainsi, les encoches 100 sont positionnées angulairement de manière fiable et précise par rapport aux logements radiaux 50 de la couronne. En outre, cette coopération permet une mise en appui de la bague 16 contre les faces transversales de fond 66 bloquant la rotation de la bague 16 par rapport au corps mâle 12, pour chacune des deux directions circonférentielles. En variante non représentée, chaque portion de face 98 d'une même dent interne 90 coopère avec sa propre rainure externe.

En configuration montée de la bague 16 sur la couronne 22, les faces transversales de fond 66, la face avant 64 et les billes de verrouillage 14 forment obstacle au déplacement de chaque dent interne 90 hors de sa rainure externe 60 dans les deux directions circonférentielles à l'axe X12 et dans les deux directions parallèles à l'axe longitudinal X12. Seul un déplacement des dents internes 90 ayant une composante radiale à l'axe X12 et dirigée vers l'extérieur permet de sortir les dents internes 90 hors des rainures externes 60.

Prise au niveau des logements radiaux 50, c'est-à-dire à l'écart des dents internes 90, l'épaisseur radiale E16 de la bague 16 est inférieure à l'épaisseur radiale E22 de la couronne 22. En particulier, l'épaisseur radiale E16 de la bague prise au niveau du logement radial 50 est strictement inférieure au rayon R14 de la bille de verrouillage 14, c'est-à-dire à la moitié du diamètre D14. Par ailleurs, l'épaisseur radiale E16 est sensiblement égale à la distance radiale entre la face externe 46 de la couronne 22 et la face externe 82 de la bague.

Les languettes 112, et en particulier leurs extrémités libres arrières 91, sont aptes à se déformer élastiquement radialement à l'axe X12 entre leur positon engagée dans leur rainure externe 60 et leur position dégagée hors de leur rainure externe 60 pour permettre le montage et éventuellement le démontage des dents 90 vis-à-vis des rainures externes 60. Au cours du montage, la déformée radiale des languettes 112 est donc plus importante au niveau longitudinal des dents internes 90 qu'au niveau longitudinal des faces courbes 106.

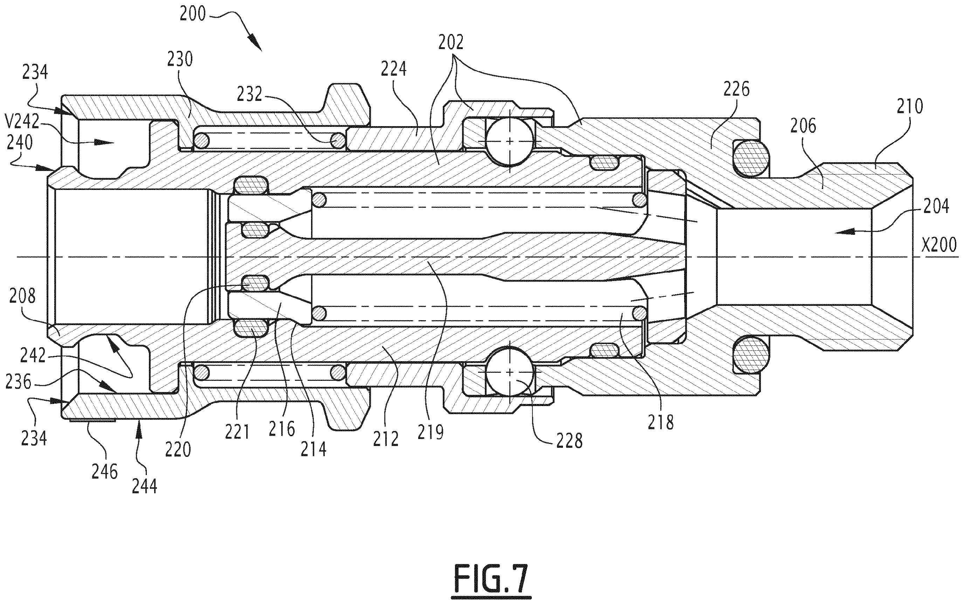

La figure 7 représente un élément femelle 200 de raccord fluidique.

L'élément femelle 200 est prévu pour être accouplé avec l'élément mâle 10 des figures 1 à 6, de sorte à former un raccord fluidique.

L'élément femelle 4 comprend un corps femelle 202, qui s'étend selon un axe longitudinal X200 qui est confondu avec les axes longitudinaux X12 et X16 lorsque l'élément femelle est accouplé avec l'élément mâle 10. Le corps femelle 202 de l'élément femelle 200 est réalisé en métal, par exemple en aluminium ou en laiton.

Le corps femelle 202 est creux, présente une symétrie de révolution autour de l'axe longitudinal X200 et délimite un conduit interne 204 traversant, dont l'extrémité distale est configurée pour recevoir l'extension tubulaire 20 de l'élément mâle 10.

Le corps femelle 202 présente une extrémité proximale 206 et une extrémité distale 208. Le conduit interne 204 débouche sur les extrémités 206 et 208. Du côté de l'extrémité proximale 206, l'extérieur du corps femelle 202 comprend un filetage 210 de façon à pouvoir être assemblé à une canalisation non représentée.

Du côté de l'extrémité distale 208, le conduit interne 204 est logé dans une extension cylindrique 212 du corps femelle 202. L'extension cylindrique 212 présente un renflement intérieur 214 qui forme une butée pour une soupape annulaire 216 mobile à l'intérieur du conduit interne 204 selon l'axe longitudinal X200 entre une position avancée de fermeture étanche du conduit interne 204 et une position reculée d'ouverture du conduit interne 204. À la figure 7, la soupape est représentée en position de fermeture étanche du conduit interne. La soupape annulaire 216 est repoussée vers l'avant du corps femelle 202 par un ressort hélicoïdal 218.

La soupape annulaire 216 entoure un poussoir fixe 219 qui s'étend le long de l'axe longitudinal X200. Le poussoir est fixe au sein du conduit interne 204 et présente une gorge périphérique externe dans laquelle est logé un organe d'étanchéité 220. Dans l'exemple des figures, l'organe d'étanchéité 220 est un joint torique.

L'élément femelle 200 comprend aussi un organe d'étanchéité 221, logé dans une gorge périphérique interne ménagée à l'extrémité distale 208 de l'extension cylindrique 212. Dans l'exemple des figures, l'organe d'étanchéité 221 est un joint torique.

Le corps femelle 202 comprend également un manchon externe 224, un adaptateur 226 et des billes d'assemblage 228. L'extension cylindrique 212, le manchon externe 224, l'adaptateur 226 et les billes d'assemblage 228 sont assemblés fixement les uns aux autres par déformation plastique de l'extrémité proximale du manchon externe 224 autour d'un logement ménagé dans l'adaptateur 226 pour les billes d'assemblage 228. Cette déformation plastique du manchon externe 224 n'est pas représentée sur les figures.

L'élément femelle 200 comprend aussi un manchon de verrouillage 230 monté autour de l'extension cylindrique 212 et du manchon externe 224.

Le manchon de verrouillage 230 est repoussé vers l'avant dans une position dite « de verrouillage » contre une butée de l'extension cylindrique 212 par un ressort de rappel 232, qui prend appui conjointement sur le manchon externe 224 et sur le manchon de verrouillage 230. Cette position est montrée à la figure 7.

Le manchon de verrouillage 230 présente une face avant 234 et une face radiale interne de verrouillage 236, toutes deux orientées vers l'axe X200. La face avant 234 est divergente vers l'avant par rapport à l'axe longitudinal X200. La face de verrouillage 236 présente une forme de cylindre de section circulaire centré sur l'axe longitudinal X200.

L'extension cylindrique 212 présente, à son extrémité distale 208, une face externe inclinée 240 et une gorge annulaire externe 242 de verrouillage. La face externe inclinée 240 est convergente vers l'avant par rapport à l'axe longitudinal X200 et disposée plus en avant que la gorge annulaire externe 242. En position de verrouillage du manchon de verrouillage 230, la face externe inclinée 240 s'étend au-delà de la face avant 234 dans la direction longitudinale avant X.

La gorge annulaire externe 242 présente une forme de section de tore centré sur l'axe longitudinal X200, est orientée vers l'extérieur et est adaptée pour recevoir partiellement les billes de verrouillage 14 de l'élément mâle 10.

Avantageusement, la face radiale externe 244 du manchon de verrouillage 230 porte un repérage couleur 246, dont la couleur est choisie pour être identique à la couleur de la bague 16 de l'élément mâle 10 de raccord. Ainsi, dans un environnement industriel où de nombreux éléments de raccord peuvent être présents, il est simple, grâce aux couleurs identiques du repérage couleur 246 et de la bague 16, d'associer l'élément mâle 10 avec l'élément femelle 200.

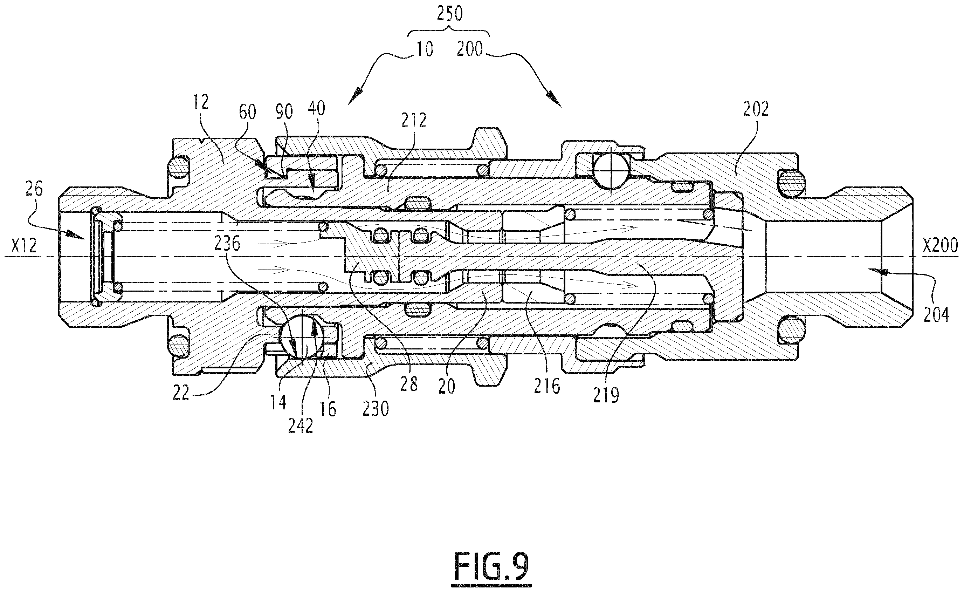

Les figures 8 et 9 représentent l'accouplement, ou l'emmanchement, de l'élément femelle 200 de raccord fluidique avec l'élément mâle 10 de raccord fluidique. Accouplés, l'élément mâle 10 et l'élément femelle 200 forment ensemble un raccord fluidique 250.

À la figure 8, le raccord fluidique 250 est en configuration d'accouplement, c'est-à-dire que l'élément mâle est en cours d'emmanchement avec l'élément femelle.

À la figure 9, le raccord fluidique 250 est en configuration accouplée, c'est-à-dire que l'élément mâle est emmanché avec l'élément femelle.

Dans une première phase d'accouplement, les éléments mâle 10 et femelle 200 sont alignés de sorte que les axes longitudinaux X12 et X200 sont confondus, puis l'extension tubulaire 20 de l'élément mâle 10 est rapprochée de l'élément femelle 200 selon l'axe longitudinal d'emmanchement X12 et pénètre dans l'extension cylindrique 212 jusqu'à ce que son extrémité distale 21 parvienne en contact avec la soupape annulaire 216 et que la soupape 28 de l'élément mâle 10 parvienne en contact avec le poussoir fixe 219.

Dans une phase ultérieure du rapprochement, qui est illustrée à la figure 8, l'extrémité distale 208 de l'élément femelle 200 pénètre dans l'espace annulaire 40 du corps mâle 12 et la face externe inclinée 240 de l'extension cylindrique 212 pousse les billes de verrouillage 14 en direction de leur position externe de déverrouillage. L'extension tubulaire 20 vient en contact étanche avec l'organe d'étanchéité 221.

En poursuivant le rapprochement, les billes de verrouillage 14, qui font alors saillie de la face radiale externe 82 de la bague 16, entrent en contact avec la face avant 234 du manchon de verrouillage 230 et repoussent le manchon de verrouillage 230 en arrière de l'élément femelle 200 à l'encontre du ressort 232 jusqu'à ce que les billes de verrouillage 14 soient en regard de la gorge annulaire externe 242 du corps femelle 202 de l'élément femelle 200. À ce stade, le manchon de verrouillage 230, repoussée par le ressort 232 vers sa position de verrouillage, repousse les billes de verrouillage 14 dans la gorge annulaire externe 242, en position interne, dans laquelle elles sont maintenues par la face de verrouillage 236 du manchon de verrouillage 230. Cette configuration correspond à la configuration de la figure 9. La face de verrouillage 236 est alignée radialement avec la gorge annulaire externe 242. Les billes de verrouillage 14 forment alors obstacle au déplacement longitudinal de l'extension cylindrique 212 de l'élément femelle 200 hors de l'espace annulaire 40. La configuration accouplée du raccord fluidique 250 est atteinte.

Dans la configuration accouplée de la figure 9, la soupape 28 de l'élément mâle 10 est repoussée vers l'arrière par le poussoir fixe 219, au sein du conduit interne 26, vers l'arrière de l'élément mâle 10 dans sa position d'ouverture. Conjointement, la soupape annulaire 216 est repoussée vers l'arrière par l'extension tubulaire 20 de l'élément mâle 10 dans une position d'ouverture, dans laquelle un fluide peut librement circuler entre le conduit interne 204 et le conduit interne 26.

Ainsi, dans cette configuration, l'élément mâle 10 et l'élément femelle 200 sont conjointement en position d'ouverture et les conduits internes 26 et 204 communiquent fluidiquement entre eux. L'organe d'étanchéité 221 assure l'étanchéité entre l'extension cylindrique 212 et l'extension tubulaire 20.

La connexion de la canalisation associée à l'élément mâle 10 avec la canalisation associée à l'élément femelle 200 est alors établie et un fluide peut s'écouler depuis l'élément mâle vers l'élément femelle. Cet écoulement est représenté pas des flèches à la figure 9, montrant le parcours d'un fluide dans le raccord fluidique 250.

L'accouplement est dit automatique puisque le seul mouvement de rapprochement du corps femelle 202 de l'élément femelle 200 et du corps 12 de l'élément mâle 10 selon les axes longitudinaux X12 et X200 permet d'atteindre la configuration accouplée.

Comme visible à la figure 9, en configuration accouplée du raccord fluidique 250 et en position de verrouillage du manchon de verrouillage 230, la face de verrouillage 236 est située en regard de la gorge annulaire externe 242 dans une direction radiale à l'axe X200. La face de verrouillage 236 et la gorge annulaire externe 242 définissent alors un volume de réception V242 des billes de verrouillage 14. Autrement dit, la face de verrouillage 236 limite radialement le volume de réception V242 de sorte que les billes de verrouillage 14 sont maintenues dans leur position interne de verrouillage et ne peuvent se déplacer en position externe de déverrouillage.

En particulier, en configuration accouplée du raccord fluidique 250 et en position de verrouillage du manchon de verrouillage 230, le manchon de verrouillage entoure la bague 16, et notamment les encoches 100, et recouvre ainsi radialement les billes de verrouillage 14. Le manchon de verrouillage maintient ainsi les billes de verrouillage 14 en position interne de verrouillage où elles sont engagées dans la gorge annulaire externe 242 du corps femelle 202, lui-même engagé dans l'espace annulaire 40, pour retenir le corps femelle dans le corps mâle 12.

Lorsque les billes de verrouillage 14 sont en position interne en configuration accouplée, avec les billes en contact avec la face de verrouillage 236 du manchon de verrouillage 230, les parois intérieures 52 des logements radiaux 50 sont disposées tout autour du centre des billes de verrouillage. En d'autres termes, et comme visible à la figure 9, dans une direction radiale, le centre de chaque bille de verrouillage 14 est aligné avec les logements radiaux 50 et éloigné de la bague 16. Sur les figures 8 et 9, le centre de la bille est repéré par le croisement de deux droites perpendiculaires. Ainsi en position interne, les billes ne peuvent venir qu'au contact de la couronne 22, mais pas au contact de la bague 16, pour s'opposer à un mouvement relatif de l'élément femelle 200 dans l'élément mâle 10, en particulier un mouvement de retrait, en configuration accouplée. Le fait que la paroi intérieure 52 des logements radiaux 50 soit disposée tout autour du centre des billes de verrouillage 14 en configuration accouplée du raccord fluidique 250 est particulièrement avantageux, car cela permet d'éviter que les billes de verrouillage exercent des efforts sur la bague 16. Ainsi, il est possible de réaliser la bague 16 dans un matériau présentant de moins bonnes propriétés mécaniques que le corps mâle 12, comme par exemple un matériau polymère, ce qui rend la bague 16 plus simple et moins onéreuse à fabriquer.

Sous l'action d'une force exercée vers l'arrière sur le manchon de verrouillage 230 et suffisamment élevée pour vaincre l'effort du ressort 232, le manchon de verrouillage 230 est apte à être déplacé en translation axiale vers l'arrière de l'élément femelle 200, par un opérateur, dans une position dite « de déverrouillage ». Dans la position de déverrouillage, la face de verrouillage 236 est décalée sur l'arrière par rapport à la gorge annulaire externe 242 et le volume de réception V242 n'est plus radialement limité par la face de verrouillage 236 mais par la face avant 234. Les billes de verrouillage 14 sont alors libres de se déplacer vers leur position externe.

Ainsi, pour désaccoupler le raccord fluidique 250, l'opérateur déplace le manchon de verrouillage 230 en position de déverrouillage, ce qui permet aux billes de verrouillage 14 de se déplacer en position externe de déverrouillage et de libérer le passage pour l'extension cylindrique 212 de l'élément femelle 200 hors de l'espace annulaire 40 de l'élément mâle 10. Avec le retrait de l'extension cylindrique 212, les soupapes 28 et 216 se referment.

Grâce à la bague 16, qui est rapportée sur le corps mâle 12, les butées externes 108 qui permettent de retenir les billes de verrouillage 16 dans les logements radiaux 50 de la couronne 22 sont réalisées hors du corps mâle, c'est-à-dire qu'elles ne sont pas réalisées sur le corps mâle, ce qui permet de réaliser un corps mâle monobloc formant à la fois la couronne 22 et l'extension tubulaire 20. Cette solution permet notamment de simplifier la réalisation de l'élément mâle 12 et de réduire son encombrement, ce qui est avantageux.

De plus, grâce aux encoches 100 formant des fentes longitudinales, la déformation élastique des languettes 112 de la bague 16 est facilitée, ce qui permet de simplifier le montage de la bague sur la couronne 22 par clipsage. Mise à part les billes de verrouillage 14, les autres parties de l'élément mâle 10 étant monobloc, l'assemblage de l'élément mâle 10 est donc particulièrement simple.

Par ailleurs, la bague 16 est retenue sur le corps mâle 12 dans les deux directions longitudinales, vers l'arrière par butée contre les billes de verrouillage 14 et vers l'avant par butée contre les faces avant axiales 64 des rainures externes 60, et dans les deux directions circonférentielles, par butée des portions de faces coplanaires 98 contre la face transversale de fond 66 des rainures externes, ce qui permet de limiter les sollicitations lors du montage par clipsage de la bague sur le corps mâle.

Grâce à la forme des encoches 100 de la bague 16, le contact entre les billes de verrouillage 14 et les butées externes 108 n'est pas limité à un point, mais est réparti autour des axes centraux radiaux A50, ce qui permet une meilleure répartition des efforts sur la bague et permet de limiter les coincements des billes de verrouillage en position externe. Ainsi, la fiabilité du fonctionnement de l'élément mâle 10 est accrue, ce qui réduit les risques de dégradations ou de blocages lors de l'accouplement et du désaccouplement du raccord fluidique 250.

En outre, chaque rainure externe 60 est décalée angulairement, selon une direction orthoradiale, des logements radiaux 50 accueillant les billes de verrouillage 14, ce qui permet de limiter la fragilisation de la couronne 22. Cela permet aussi que la paroi intérieure 52 de chaque logement radial 50 dans la couronne ait une hauteur radiale identique tout autour de l'axe central radial A50 et constitue l'appui contre lequel la bille de verrouillage logée dans ce logement exerce un effort en configuration accouplée du raccord fluidique 250. De plus, cet agencement permet de réduire la longueur de la couronne, puisque les rainures externes peuvent se trouver au moins partiellement au niveau longitudinal occupé par les logements radiaux 50, ce qui améliore la compacité de l'élément mâle 10.

Par ailleurs, grâce à la portion distale annulaire 110 de la bague 16, la robustesse de la bague est améliorée.

Comme la paroi intérieure 52 de chaque logement radial 50 est en intersection sur tout son contour avec la surface de diamètre D46 constant formant la face externe 46 de la couronne, la réalisation des rainures externes 60 sur la couronne 22 est simplifiée et les rainures externes 60 peuvent être positionnées, le long de l'axe longitudinal X12, au moins partiellement en arrière des logements radiaux 50 pour réduire l'effort élastique de clipsage de la bague 16.

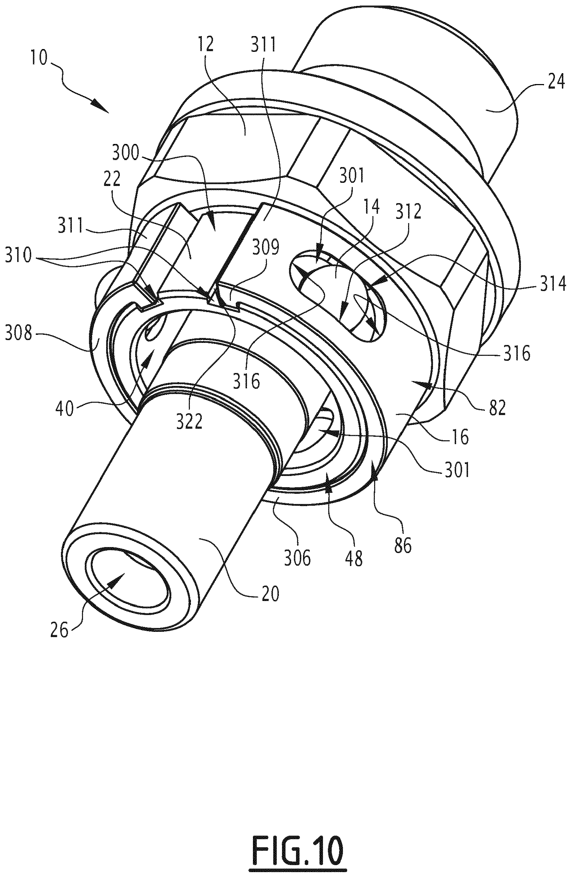

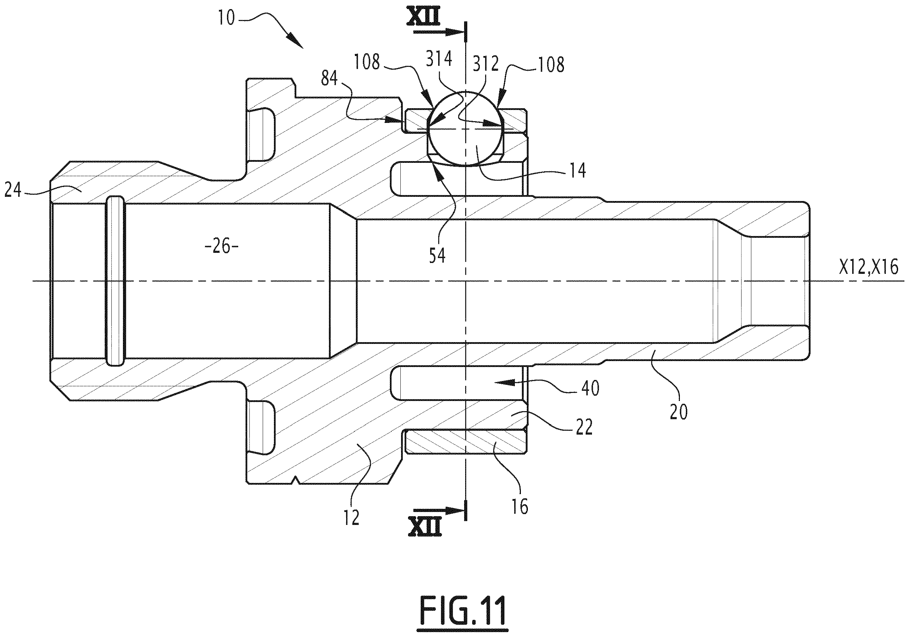

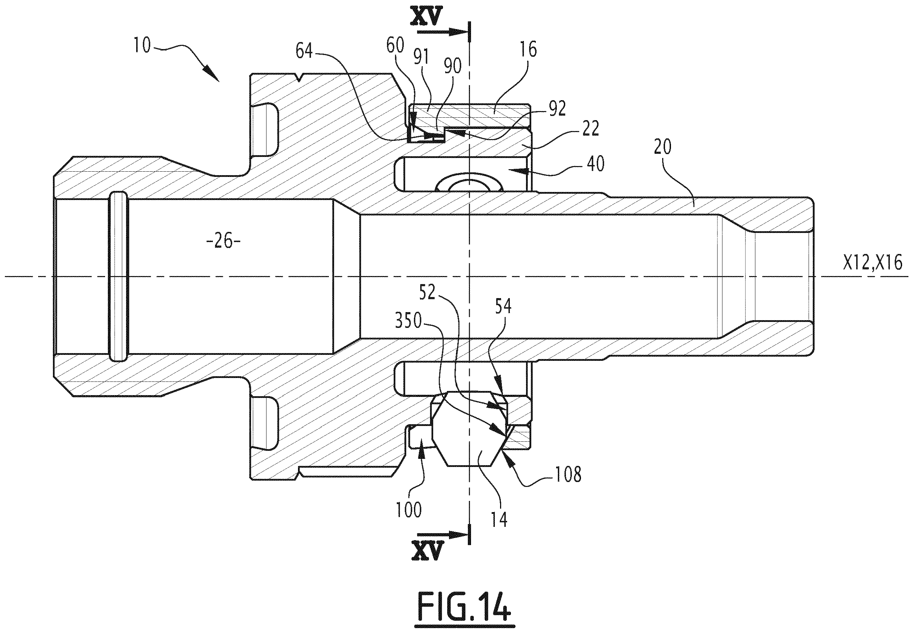

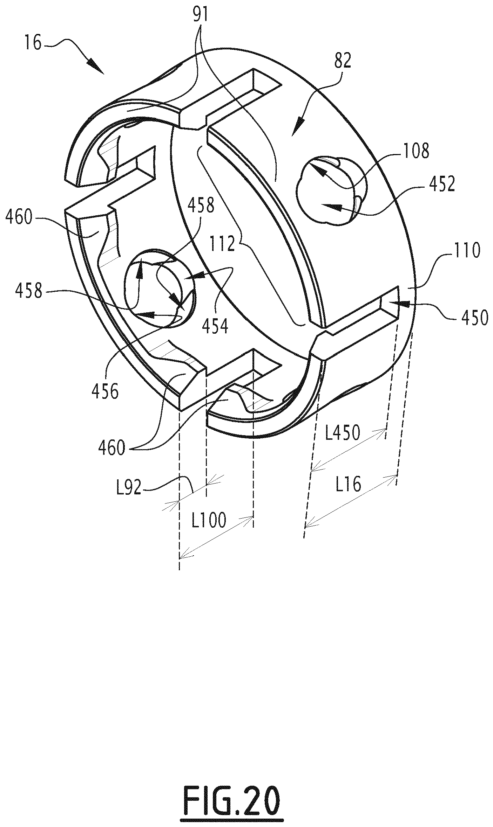

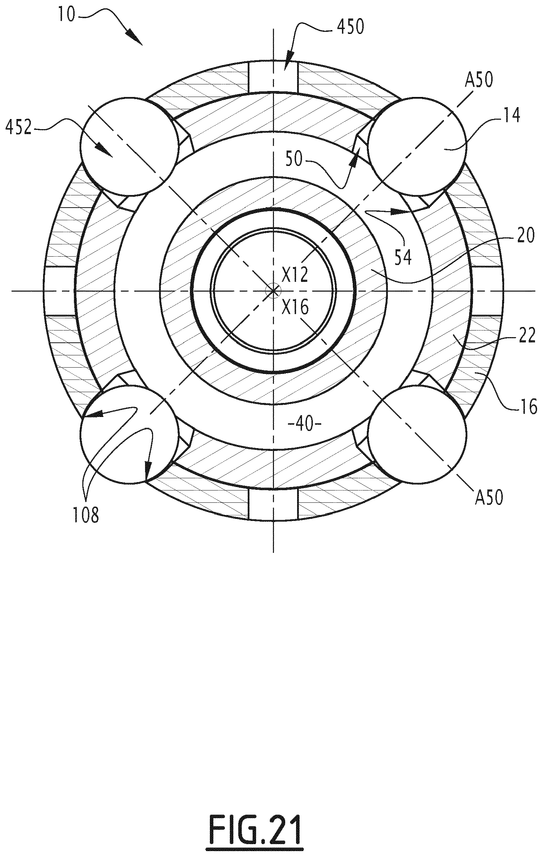

Un deuxième, un troisième, un quatrième et un cinquième mode de réalisation de l'élément mâle de raccord 10 sont représentés en figures 10 à 21. Dans chaque mode de réalisation décrit par la suite, les éléments analogues à ceux du ou des modes de réalisation précédents portent les mêmes références et fonctionnent de la même façon. Dans ce qui suit, on décrit principalement les différences entre un mode de réalisation et le ou les modes de réalisation précédents.

En outre, si un composant est mentionné dans la description d'un mode de réalisation sans être représenté sur les figures 10 à 21, il correspond au même élément représenté sur les figures 1 à 9 pour le premier mode de réalisation.

Le deuxième mode de réalisation est représenté en figures 10 à 12.

Sur les figures 10 à 12, la soupape 28, le ressort 30 et la bague d'arrêt 32, appartenant à l'élément mâle 10 du deuxième mode de réalisation, ne sont pas représentés.

Une des principales différences du deuxième mode de réalisation avec le premier mode est que la bague 16 est une bague fendue. Ainsi, la bague 16 comprend une unique fente longitudinale 300 qui, selon l'axe longitudinal X16, débouche sur la face arrière 84 de la bague 16 et débouche sur la face avant 86 de la bague et qui traversent radialement la bague de part en part depuis la face interne 80 jusqu'à la face externe 82. Ainsi, la fente longitudinale 300 est axialement et radialement traversante. En outre, la bague 16 comprend également des encoches 301, qui sont distinctes de la fente longitudinale 300.

Dans l'exemple donné aux figures 10 à 12 du deuxième mode de réalisation, la bague 16 comprend trois encoches 301. Parmi les encoches 301, la bague comprend deux encoches latérales 302 et une encoche centrale 304 portée par une portion centrale 306 de la bague. Ainsi, la bague 16 comprend deux portions latérales 308 de bague, constituées de part et d'autre de la portion centrale 306. Chaque portion latérale 308 porte une encoche latérale 302.

Chaque portion latérale 308 est donc délimitée circonférentiellement d'une part par la portion centrale 306 et d'autre part par la fente longitudinale 300, et chaque portion latérale est délimitée longitudinalement par la face arrière 84 et par la face avant 86 de la bague 16.

La largeur des portions latérales 308, mesurée le long de la circonférence de l'intersection entre la face arrière 84 et la face externe 82 de la bague, et la longueur de ces portions latérales, mesurée selon l'axe longitudinal X16, sont bien supérieures, c'est-à-dire au moins quatre fois supérieures, à l'épaisseur radiale E16 de la bague. Ainsi, les deux portions latérales sont élastiquement déformables, c'est-à-dire qu'elles sont flexibles autour de la portion centrale 306.

Les portions latérales 308 forment chacune une portion d'extrémité de la bague 16, et en particulier, dans l'exemple du deuxième mode de réalisation, une portion d'extrémité circonférentielle de la bague.

Dans le deuxième mode de réalisation, la bague 16 comprend deux dents internes 309, qui sont disposées au niveau d'une extrémité libre circonférentielle 311 de chacune des portions d'extrémité de bague, c'est-à-dire aux extrémités libres 311 des portions latérales 308 élastiquement déformables, à proximité de la fente longitudinale 300. En d'autres termes, les dents internes 309 sont portées par une extrémité libre circonférentielle 311 des portions d'extrémité de la bague 16. En configuration montée de la bague sur le corps mâle 12, les dents internes 309 sont engagées dans des rainures externes longitudinales 310 de la couronne 22, ménagées en creux à partir de la face externe 46 de la couronne. Comme visible sur la figure 10, les rainures externes longitudinales 310 débouchent sur la face avant 48 de la couronne.

Avantageusement, les rainures externes longitudinales 310 sont décalées angulairement des logements radiaux 50 de la couronne 22. Ainsi, les billes de verrouillage 14 sont éloignées des rainures externes.

En variante, les rainures externes longitudinales 310 ne débouchent pas sur la face avant 48 de la couronne, et chaque rainure forme alors une face arrière axiale, qui est en regard, dans la direction longitudinale arrière, de la face avant 86 de la bague 16 et qui permet de retenir la bague montée sur le corps mâle dans la direction longitudinale vers l'avant.

En variante, une seule rainure externe longitudinale 310 est ménagée dans la couronne 22 pour recevoir les deux dents internes 309.

Dans le deuxième mode de réalisation, les encoches 301 sont des encoches circonférentielles, c'est-à-dire qu'elles s'étendent dans une direction circonférentielle, et sont en forme de trous oblongs. Ainsi, la paroi intérieure 102 de chaque encoche 301 présente une face avant 312 plane, une face arrière 314 plane et deux faces latérales 316 qui relient les faces avant et arrière. En d'autres termes le contour de l'intersection entre les encoches 301 et la face extérieure 82 de la bague 16 est un contour fermé. La butée externe 108 d'une encoche est formée de deux zones distinctes, qui sont ménagées d'une part à la jonction de la face avant 312 de la paroi intérieure 102 avec la face externe 82 de la bague 16, et d'autre part à la jonction de la face arrière 314 avec la face externe de la bague. La butée externe d'une encoche, formée de ces deux zones, est donc répartie autour de l'axe central radial A50 du logement radial 50 associé à cette encoche.

Chaque dent interne 309 présente deux faces circonférentielles 320, planes et s'étendant chacune dans un plan radial à l'axe longitudinal X16, c'est-à-dire dans un plan comprenant l'axe longitudinal X16 et une direction radiale à l'axe longitudinal. Les faces circonférentielles 320 d'une dent interne délimitent cette dent dans une direction circonférentielle.

Chaque rainure externe longitudinale 310 présente deux faces transversales 322, planes et s'étendant chacune dans un plan radial à l'axe longitudinal X12, c'est-à-dire dans un plan comprenant l'axe longitudinal X12 et une direction radiale à l'axe longitudinal. Les faces transversales 322 d'une rainure externe délimitent cette rainure dans une direction circonférentielle.

Pour chacune des deux directions longitudinales opposées, c'est-à-dire selon l'axe longitudinal X16, vers l'avant et vers l'arrière, le déplacement de la bague 16 par rapport à la couronne 22 est limité par coopération de la paroi intérieure 102 et/ou de la butée externe 108 d'une encoche 301 avec la bille de verrouillage 14 montée dans le logement radial 50 associé à cette encoche, indépendamment du fait que la bille de verrouillage soit en position externe ou en position interne.

Pour chacune des deux directions circonférentielles à l'axe X16 opposées, c'est-à-dire selon une rotation autour de l'axe longitudinal X16 dans un sens ou dans l'autre, le déplacement de la bague 16 par rapport à la couronne 22 est limité par le corps mâle 12, par coopération d'au moins l'une des faces circonférentielles 320 des dents 309 de la bague avec au moins l'une des faces transversales 322 des rainures externes longitudinales 310. En d'autres termes, le blocage des faces circonférentielles 320 contre les faces transversales 322 empêche la rotation de la bague 16 selon les deux directions circonférentielles C à l'axe longitudinal X12.

En configuration montée de la bague 16 sur la couronne 22, les faces transversales 322 et les éléments de verrouillage 14 forment donc obstacle au déplacement de chaque dent interne 309 hors de sa rainure externe longitudinale 310 dans les deux directions longitudinales et les deux directions circonférentielles. De manière analogue au premier mode de réalisation, seul un déplacement des dents internes 309 ayant une composante radiale à l'axe X12 et dirigée vers l'extérieur permet de sortir les dents internes 309 des rainures externes longitudinales 310.

Dans le deuxième mode de réalisation, le montage de la bague 16 sur le corps mâle 12 s'effectue en disposant la bague de sorte que les axes longitudinaux X12 et X16 soient parallèles et de sorte que la fente longitudinale 300 soit en regard de la couronne 22, puis en approchant la bague du corps mâle selon une direction radiale à l'axe X12 et en écartant les extrémités libres circonférentielles 311 des deux portions latérales 308 l'une de l'autre, les deux portions latérales 308 se déformant élastiquement radialement vers l'extérieur.

La bague est ainsi approchée du corps mâle jusqu'à ce que l'axe longitudinal X16 soit confondu avec l'axe longitudinal X12. À ce moment, les deux portions latérales 308 se referment alors élastiquement autour de la couronne, les dents internes 309 pénétrant dans les rainures externes longitudinales 310.

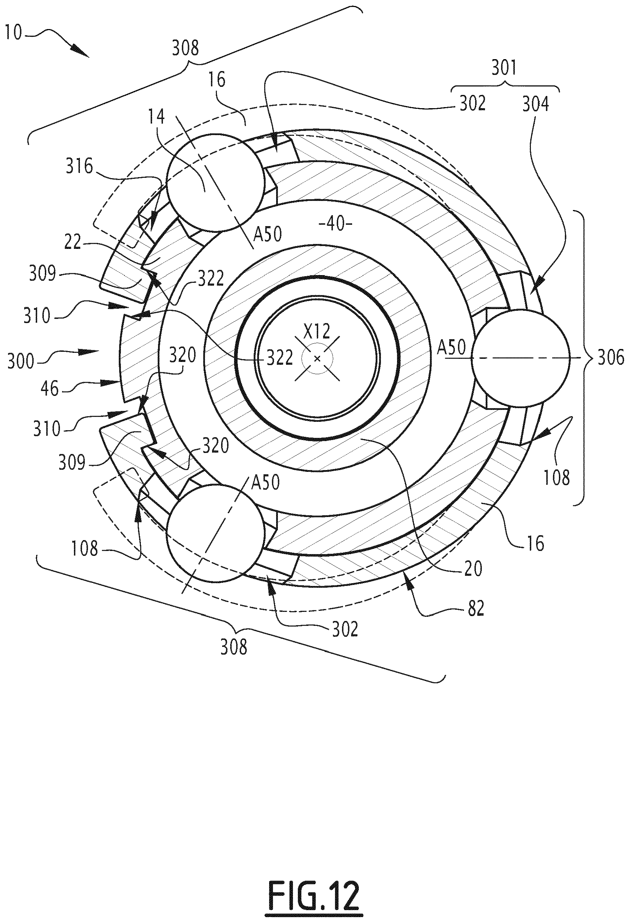

Le démontage de la bague 16 sur la couronne 22 s'effectue de manière inverse à son montage, c'est-à-dire que les deux portions latérales 308 sont déformées élastiquement radialement vers l'extérieur, jusqu'à permettre le dégagement de toutes les dents internes 309 en dehors des rainures externes longitudinales 310, c'est-à-dire le déplacement de toutes les dents internes 309 radialement vers l'extérieur de leur position engagée à leur position dégagée, puis la bague est éloignée du corps mâle 12 dans une direction perpendiculaire à l'axe X12. À la figure 12, la bague 16 est également représentée schématiquement, en pointillés, en configuration déformée ou écartée, dans une position occupée au cours du montage de la bague sur le corps mâle 12.

Dans le deuxième mode de réalisation, la bague 16 est réalisée en matériau polymère ou en matériau métallique, comme par exemple en acier.

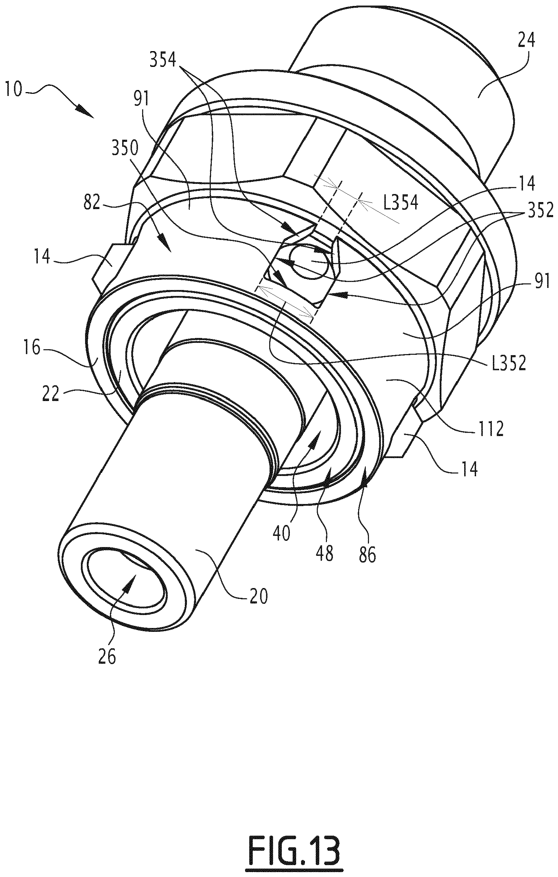

Le troisième mode de réalisation de l'invention est représenté en figures 13 à 15.

Sur les figures 13 à 15, la soupape 28, le ressort 30 et la bague d'arrêt 32 ne sont pas représentés.

Une des principales différences du troisième mode de réalisation avec les premier et deuxième modes est que la butée externe 108 de chaque encoche 100 de la bague 16 est formée de trois saillies en contact ponctuel, autour de l'axe central radial A50, avec l'élément de verrouillage 14 associé à cette encoche. De plus, les éléments de verrouillage 14 sont des segments.

Dans l'exemple, chaque segment de verrouillage 14 est un solide de révolution, dont l'axe de rotation est l'axe A50 du logement radial 50 accueillant ce segment, et dont la surface génératrice est délimitée par un hexagone dont deux côtés sont perpendiculaires à l'axe A50. On note « L14 » maximale la largeur d'un segment de verrouillage 14, mesuré perpendiculairement à l'axe A50, en configuration assemblée de l'élément mâle 10.

Comme dans le premier mode de réalisation, les encoches 100 débouchent sur la face arrière 84 de la bague 16 et traversent radialement la bague, et débouchent donc sur la face interne 80 et sur la face externe 82 de la bague. Les encoches 100 forment des fentes longitudinales de la bague 16.

Dans le troisième mode de réalisation, la paroi intérieure 102 de chaque encoche 100 comprend une face avant 350, deux faces latérales 352 et deux faces arrières 354.

La face avant 350 de chaque encoche est plane et orientée de sorte qu'une droite normale à la face avant 350 contenue dans un plan radial à l'axe longitudinal X16 est sécante avec l'axe longitudinal X16. En d'autres termes, la face avant 350 est inclinée, par rapport à une face axiale à l'axe longitudinal X16. La face avant 350 de chaque encoche est inclinée de sorte que l'intersection entre la face avant 350 et la face externe 82 de la bague 16 est située plus en arrière de la bague, selon l'axe longitudinal X16, que l'intersection entre la face avant 350 et la face interne 80 de la bague.

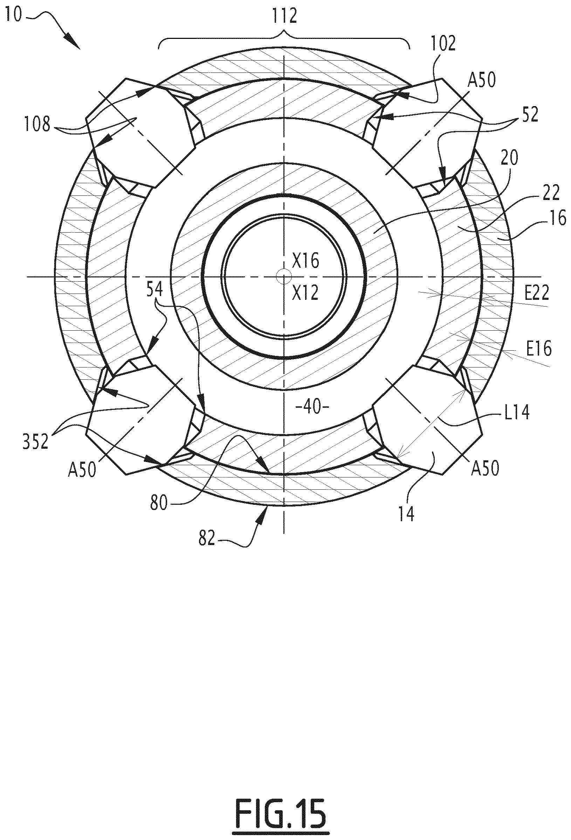

Comme mieux visible à la figure 15, les deux faces latérales 352 de chaque encoche sont planes et inclinées par rapport à l'axe A50. Ainsi, les jonctions entre les faces latérales 352 et la face externe 82 de la bague 16 s'étendent parallèlement à l'axe X16 et sont parallèles entre elles. Les deux faces latérales 352 convergent l'une vers l'autre depuis la face interne 80 de la bague vers la face externe 82 de la bague.

Les deux faces arrières 354 s'étendent depuis l'extrémité des deux faces latérales 352 vers l'arrière de la bague 16, et débouchent sur la face arrière 84 de la bague. De plus, selon l'axe longitudinal X16, les deux faces arrières 354 convergent l'une vers l'autre en s'approchant de la face arrière 84. En d'autres termes, dans une direction orthoradiale, la largeur entre les deux faces arrières 354 au niveau des faces latérales 352, noté « L352 », est plus important que la largeur entre les deux faces arrières 354 au niveau de la face arrière 84, noté « L354 ».

La butée externe 108 de chaque encoche 100 est formée au niveau de la jonction entre d'une part la face externe 82 de la bague, et d'autre part les faces avant 350 et latérales 352 de la paroi interne de l'encoche, qui forment les trois saillies. La butée externe 108 d'une encoche est donc répartie autour de l'axe central radial A50 du logement radial 50 associé à cette encoche, grâce aux trois saillies régulièrement réparties à 90° autour de l'axe central radial. Chaque segment de verrouillage est donc en contact ponctuel avec la face avant 350 et les deux faces latérales 352 d'une encoche.

La largeur L14 des segments de verrouillage 14 est sensiblement égal au diamètre D50, au jeu de fonctionnement près.

La largeur L14 des segments de verrouillage est supérieure aux largeurs L352 et L354.

Avantageusement, l'épaisseur radiale E22 de la couronne 22 est supérieure à l'épaisseur radiale E16 de la bague 16.

Dans le troisième mode de réalisation, le montage de la bague 16 sur le corps mâle 12 s'effectue comme dans le premier mode de réalisation, par clipsage, au cours d'un mouvement de translation de la bague selon les axes longitudinaux X12 et X16 de l'avant vers l'arrière de l'élément mâle 10. Au cours de ce mouvement de translation, les languettes 112 se déforment élastiquement au contact des segments de verrouillage 14, du fait que la largeur L354 des encoches 100 est inférieure à la largeur L14 des segments.

Comme dans le premier mode de réalisation, en configuration montée de la bague 16, le déplacement vers l'avant de la bague par rapport à la couronne 22 est limité par la mise en butée de la face avant 92 des dents internes 90 avec la face avant 64 des rainures externes et le déplacement vers l'arrière de la bague par rapport à la couronne est limité par la mise en butée des encoches 100 avec les segments de verrouillage 14 associés, et plus précisément des faces avant 350 des parois intérieures 102 avec les segments, indépendamment du fait que les segments de verrouillage soient en position externe ou en position interne.

Comme dans le premier mode, en configuration montée de la bague, pour chacune des deux directions circonférentielles opposées, le déplacement de la bague par rapport à la couronne est limité par coopération des dents internes 90 avec la face transversale de fond 66 plane et orthoradiale des rainures externes 60.

Comme dans le premier mode, les dents internes 90 sont formées sur l'extrémité libre arrière 91 des languettes 112, et chaque languette correspond à une portion d'extrémité de la bague, et en particulier, à une portion d'extrémité axiale proximale de la bague.

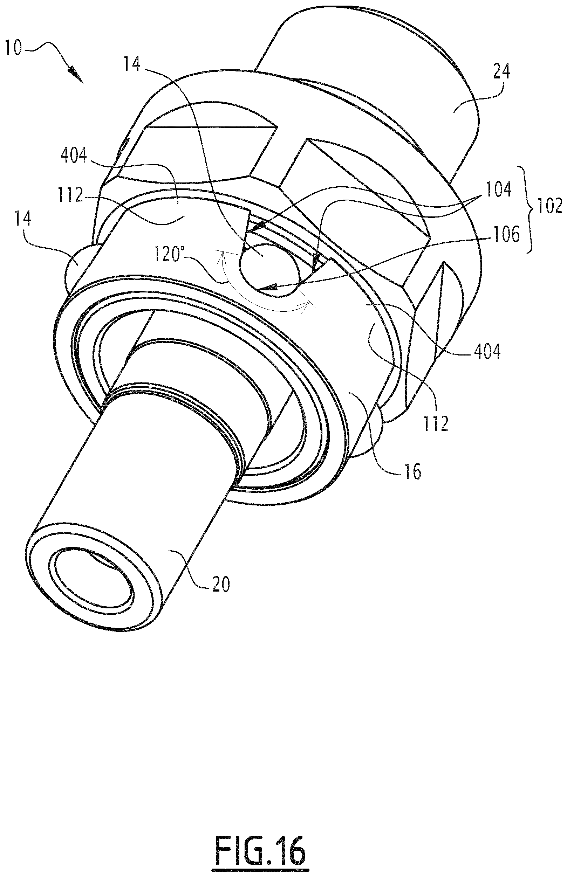

Le quatrième mode de réalisation de l'invention est représenté en figures 16 à 18.

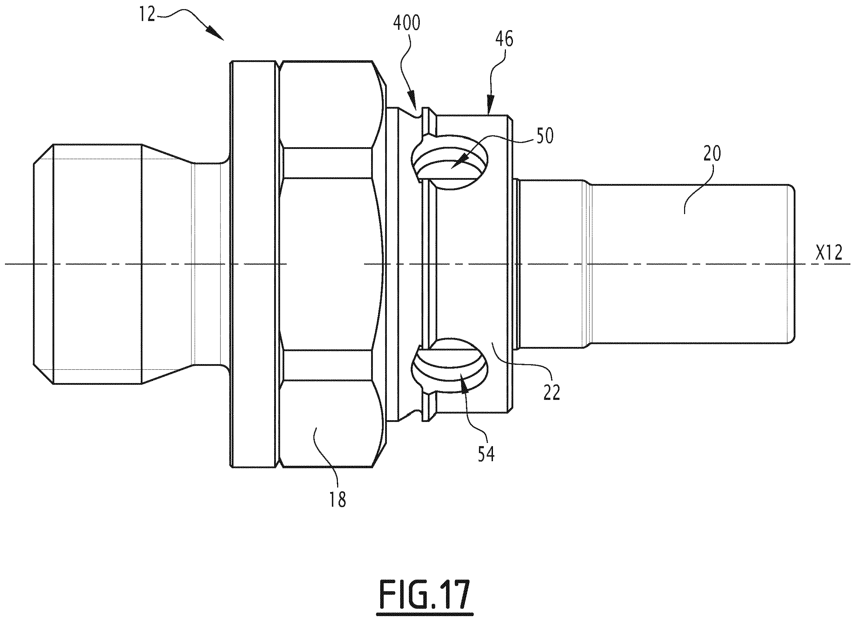

Sur les figures 16 à 18, la soupape 28, le ressort 30 et la bague d'arrêt 32 ne sont pas représentés. Sur la figure 17, les éléments de verrouillage 14 et la bague 16 ne sont pas représentés.

Comme dans le premier mode de réalisation, les encoches 100 du quatrième mode de réalisation débouchent sur la face arrière 84 de la bague 16 et traversent radialement la bague, et débouchent donc sur la face interne 80 et sur la face externe 82 de la bague.

Une des principales différences du quatrième mode de réalisation avec les trois premiers modes est que les faces planes 104 de la paroi intérieure 102 d'une encoche 100 divergent vers l'arrière, c'est-à-dire que les faces planes 104 s'éloignent l'une de l'autre depuis la face courbe 106 jusqu'à la face arrière 84 de la bague 16.

La butée externe 108 de chaque encoche 100 correspond à l'intersection entre la face courbe 106 et la face externe 82 de la bague 16, et la butée externe de chaque encoche est ainsi formée d'un secteur angulaire d'amplitude strictement inférieure à 180°. Dans l'exemple, la butée externe de chaque encoche est formée d'un secteur angulaire d'amplitude de 120°. En particulier, l'angle formé entre les deux faces planes 104 est de 60°.

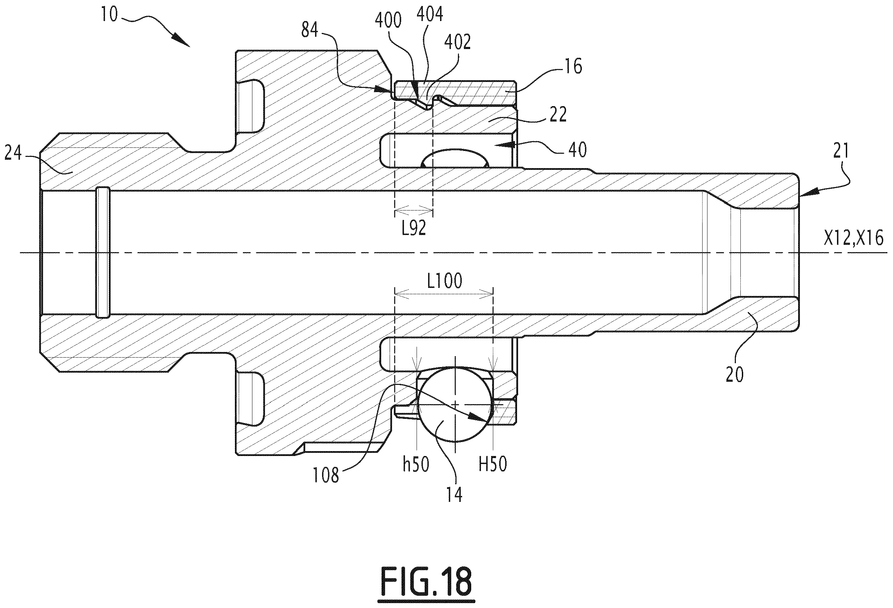

Une autre différence du quatrième mode de réalisation avec les trois premiers modes est que la face externe 46 de la couronne 22 comprend une rainure externe 400. La rainure externe 400 est circonférentielle, c'est-à-dire qu'elle s'étend tout autour de la couronne 22, tout autour de l'axe X12, dans une direction circonférentielle. En d'autres termes, selon l'axe longitudinal X12, les deux extrémités circonférentielles de chaque rainure externe 60 sont disposées au même niveau. Chaque languette 112 de la bague 16 comprend une dent interne 402, de forme complémentaire à la rainure externe 400, de sorte que, en configuration montée de la bague 16, les dents internes 402 sont clipsées, ou engagées, dans la rainure externe 400, comme mieux visible à la figure 18. Les dents internes 402 délimitent chacune une face avant 92.

La rainure externe 400 est disposée, selon l'axe longitudinal X12, au niveau des logements radiaux 50, plus précisément au niveau de l'arrière des logements radiaux. Ainsi, la hauteur radiale distale H50 d'un logement radial 50 est supérieure à sa hauteur radiale proximale h50.

Dans le quatrième mode de réalisation, comme dans le premier mode, chaque languette 112 correspond à une portion d'extrémité de la bague, et en particulier, à une portion d'extrémité axiale proximale. Chaque languette 112 est élastiquement déformable. De plus, la longueur L92 étant inférieure à la moitié de la longueur L100. Les dents 402 sont donc formées au niveau d'une extrémité libre arrière 404 des languettes, et donc des portions d'extrémité de la bague. Plus précisément, les dents 402 ne sont pas sécantes avec la face arrière 84 de la bague 16 mais chaque dent 402 est disposée sur une partie 404 de la portion d'extrémité de la bague qui peut se déplacer radialement pour le montage et éventuellement pour le démontage de la bague, du fait de la déformation élastique de la portion d'extrémité.

Dans le quatrième mode de réalisation, le montage de la bague 16 sur le corps mâle 12 s'effectue comme dans le premier mode de réalisation, par clipsage des dents 402 dans la rainure 400, au cours d'un mouvement de translation de la bague selon les axes longitudinaux X12 et X16 de l'avant vers l'arrière du corps mâle 12, avec les languettes 112 qui se déforment élastiquement radialement vers l'extérieur autour de la face externe 46 en position dégagée puis sont rappelées élastiquement en position engagée dans la rainure 400.

En configuration montée de la bague 16, le déplacement vers l'avant de la bague par rapport à la couronne 22 est limité par la mise en butée d'une face axiale avant de la dent interne 402 contre une face avant axiale de la rainure externe 400 et le déplacement vers l'arrière de la bague par rapport à la couronne est limité par la mise en butée des encoches 100 avec les éléments de verrouillage 14 associés, indépendamment du fait que les éléments de verrouillage soient en position externe ou en position interne.

En configuration montée de la bague 16, pour chacune des deux directions circonférentielles opposées, le déplacement de la bague par rapport à la couronne 22 est limité par la mise en butée des encoches 100 contre les éléments de verrouillage 14, indépendamment de la position radiale des éléments de verrouillage 14 dans les logements radiaux 50, les éléments de verrouillage étant eux-mêmes retenus dans les logements radiaux 50 par les butées externes 108 des encoches.

De préférence, dans le quatrième mode de réalisation, l'élément mâle 10 comprend quatre éléments de verrouillage 14 et autant de logements radiaux 50 et d'encoches 100.

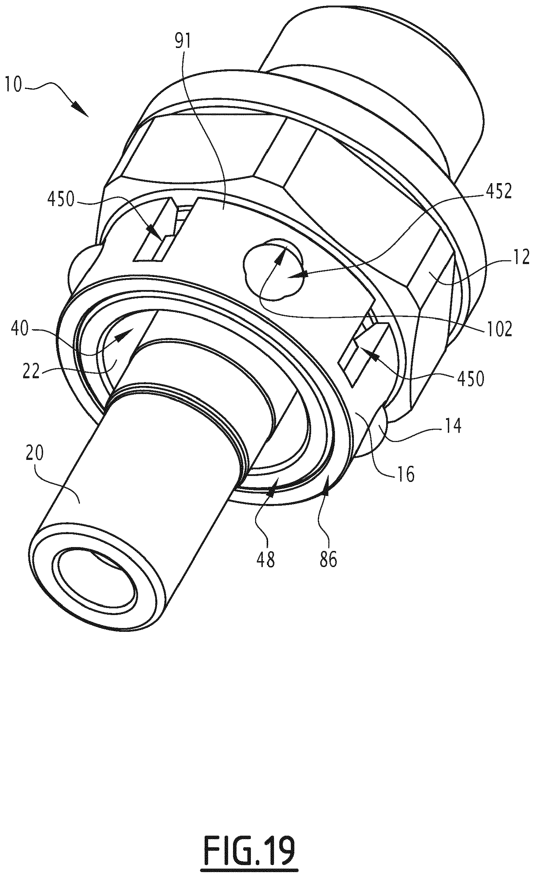

Le cinquième mode de réalisation de l'invention est représenté en figures 19 à 21.

Sur les figures 19 à 21, la soupape 28, le ressort 30 et la bague d'arrêt 32 ne sont pas représentés.

Une des principales différences du cinquième mode de réalisation avec les quatre premiers modes est que la bague 16 comprend des fentes longitudinales 450 et des encoches longitudinales 452 qui sont distinctes des fentes longitudinales. En configuration montée de la bague 16, les encoches longitudinales sont situées en regard des logements radiaux 50 de la couronne 22 dans une direction radiale.

Ainsi, les fentes longitudinales 450 délimitent circonférentiellement les languettes 112 et permettent la déformation élastique des languettes nécessaire au montage de la bague sur la couronne 22.

Chaque fente longitudinale 450 s'étend depuis la face avant 86 de la bague 16 jusqu'à la portion distale annulaire 110 de la bague. De préférence, les fentes longitudinales 450 s'étendent sur une longueur L450 comprise entre 50% et 80% de la longueur L16 de la bague 16.

Chaque encoche 452 est portée par une languette 112. Ainsi, chaque encoche 452 est disposée, dans une direction circonférentielle, entre deux fentes longitudinales 450 adjacentes.

Dans l'exemple, les encoches longitudinales 452 et les fentes longitudinales 450 sont régulièrement réparties dans une direction circonférentielle autour de l'axe X12, et sont décalées angulairement de 45° autour de l'axe X12.

Les encoches 452 comprennent une face avant 454, une face arrière 456 et deux faces latérales 458, qui forment la paroi intérieure 102 des encoches.

La butée externe 108 d'une encoche 452 est formée à l'intersection des deux faces latérales 458 de cette encoche avec la face externe 82 de la bague 16. Les butées externes sont donc réparties autour des axes centraux radiaux A50 des logements radiaux 50. En particulier, les deux faces latérales 458 d'une encoche forment deux zones de butée externe sous forme de secteurs angulaires, qui ont chacun, dans l'exemple, une amplitude angulaire de 80° autour de l'axe central radial A50 du logement radial associé à cette encoche.

Pour chaque encoche 452, la butée externe 108 et la paroi intérieure 102 sont dans le prolongement l'une de l'autre, et forment une surface concave en portion de sphère.

Chaque languette 112 de la bague 16 comprend en outre deux dents internes 460, disposées à l'extrémité libre arrière 91 de la languette et aux deux extrémités de la languette, dans une direction circonférentielle. Ainsi, les dents internes 460 d'une languette 112 sont disposées de part et d'autre de l'encoche longitudinale 452 de cette languette autour de l'axe X16.

De manière analogue au premier mode de réalisation, les dents internes 460 viennent se clipser dans des rainures externes 60 planes et orthoradiales de la couronne 22. En particulier, comme dans le premier mode de réalisation, ces rainures externes 60 sont décalées angulairement des logements radiaux 50 autour de l'axe X12. Ainsi deux dents internes 460 disposées de chaque côté circonférentiel d'une fente longitudinale 450, donc formées sur deux languettes 112 adjacentes, sont engagées dans la même rainure externe 60.

Dans le cinquième mode de réalisation, comme dans le premier mode, les languettes 112 correspondent à des portions d'extrémité de la bague, et en particulier, à des portions d'extrémité axiales proximales. Ces languettes 112 sont élastiquement déformables. De plus, les dents internes 460 sont formées aux extrémités libres arrières 91 des languettes, et donc des portions d'extrémité de la bague. Plus précisément, les dents 460 forment une extrémité intérieure de la portion d'extrémité de la bague.

Comme dans le premier mode de réalisation, la retenue longitudinale de la bague 16 par rapport au corps mâle 12 et des dents internes 460 dans leur rainure externe 60 s'effectue vers l'avant par butée des dents internes 460 des languettes 112 de la bague 16 contre les rainures externes 60 de la couronne 22 et vers l'arrière par butée des butées externes 108 des encoches 452 de la bague contre les éléments de verrouillage 14.

De manière analogue au premier mode de réalisation, dans les directions circonférentielles, la retenue de la bague 16 par rapport au corps mâle 12 et des dents internes 460 dans leur rainure externe 60 se fait par la butée des dents internes 460 contre les rainures externes 60 de la couronne 22.

En variante non-représentée de l'invention, les logements radiaux 50 de la couronne 22 ne sont pas délimités par une butée interne 54 formée sur la couronne 22, vers l'intérieur. Dans une telle variante, l'épaisseur radiale de l'espace annulaire 40, noté « E40 », est inférieure à la moitié de la dimension radiale des éléments de verrouillage 14, afin d'empêcher le coincement des éléments de verrouillage dans l'espace annulaire lors de l'accouplement de l'élément mâle 10 avec l'élément femelle 200. En particulier, lorsque les éléments de verrouillage sont des billes de verrouillage, l'épaisseur radiale E40 est inférieure à la moitié du diamètre D14. Le déplacement de chaque élément de verrouillage 14 radialement vers l'intérieur dans le logement radial 50 associé est alors empêché par une butée interne constituée par la face radiale externe 42 du corps mâle 12.

En variante non-représentée de l'invention, une seule portion d'extrémité comprend une ou plusieurs dents internes pour la fixation de la bague 16 sur le corps mâle 12.

En variante non-représentée de l'invention, la butée externe 108 n'est pas régulièrement répartie autour de l'axe central radial A50 du logement radial 50.

En variante non représentée, la face avant 64 de la rainure externe 60 est plane et inclinée de +/- 10° par rapport à un plan perpendiculaire à l'axe longitudinal X12. La géométrie de la face avant 92 de la dent interne est alors complémentaire pour avantageusement permettre une mise en appui plan de la face avant 92 contre la face avant 64 suivant la direction longitudinale avant X.

Pour tous les modes de réalisation, l'encoche est ménagée en creux dans la bague, c'est-à-dire qu'une surface annulaire, c'est-à-dire s'étendant tout autour de l'axe X16 dans la direction circonférentielle, ne peut délimiter une encoche au sens de l'invention.

Pour tous les modes de réalisation, la ou les portions d'extrémité de la bague sont délimitées par la face arrière de la bague, une première fente longitudinale et par l'une parmi la face avant de la bague et une deuxième fente longitudinale adjacente à la première fente longitudinale.

Toute caractéristique décrite pour un mode de réalisation ou une variante dans ce qui précède peut être mise en oeuvre pour les autres modes de réalisation et variantes décrits précédemment, pour autant que techniquement faisable.

## Revendications

1. Élément mâle (10) de raccord fluidique comprenant :
- un corps mâle (12), centré sur un axe longitudinal (X12), définissant une direction longitudinale avant (X) et comprenant :
∘ une extension tubulaire (20) centrée sur l'axe longitudinal, délimitant un conduit interne (26) et présentant une face radiale externe (42), et
∘ une couronne (22) disposée de manière fixe autour de l'extension tubulaire et présentant au moins un logement radial (50), chaque logement radial débouchant sur une face interne (44) et sur une face externe (46) de la couronne (22), la face interne (44) de la couronne et la face radiale externe (42) de l'extension tubulaire délimitant radialement entre elles un espace annulaire (40) ;
- une bague (16), monopartite, montée autour de la couronne ;
- pour chaque logement radial (50), un élément de verrouillage (14) dont le déplacement radialement vers l'extérieur dans le logement radial (50) associé est limité par une butée externe (108) formée par la bague (16) à une jonction entre une encoche (100 ; 301 ; 452) de la bague et une face externe (82) de la bague, chaque élément de verrouillage (14) étant mobile dans son logement radial (50) entre :
∘ une position interne, dans laquelle l'élément de verrouillage fait saillie de la face interne (44) et de la face externe (46) de la couronne (22) et ne fait pas saillie de la face externe (82) de la bague, et dans laquelle le déplacement de chaque élément de verrouillage (14) radialement vers l'intérieur dans le logement radial (50) associé est empêché par une butée interne (54) formée par le corps mâle (12), et
∘ une position externe, dans laquelle l'élément de verrouillage fait saillie de la face externe (82) de la bague,
dans lequel, en configuration montée de la bague (16) sur la couronne (22),
- le corps mâle (12) est en regard suivant la direction longitudinale avant (X) d'une face arrière (84) de la bague, et
- la bague (16) est en regard, suivant la direction longitudinale avant (X), du corps mâle (12), ou d'au moins un élément de verrouillage (14), au moins lorsque cet élément de verrouillage est en position interne,
**caractérisé en ce que** :
- chaque logement radial (50) est délimité par une paroi intérieure (52) appartenant à la couronne (22), la paroi intérieure (52) s'étendant tout autour d'un axe central radial (A50) du logement radial ;
- la bague (16) présente au moins une fente longitudinale (100 ; 300 ; 450), qui traverse radialement la bague (16) et qui débouche sur la face arrière (84) de la bague ;
- la bague comprend une portion d'extrémité (112 ; 308) élastiquement déformable, délimitée par la fente longitudinale (100 ; 300 ; 450) et la face arrière (84) de la bague ; et
- une extrémité libre (91 ; 311 ; 404) de la portion d'extrémité (112 ; 308) comprend au moins une dent interne (90 ; 309 ; 402 ; 460) qui, en configuration montée de la bague (16) sur la couronne (22), est engagée dans une rainure externe (60 ; 310 ; 400), ménagée en creux dans la face externe (46) de la couronne.

2. Élément mâle (10) selon la revendication 1, **caractérisé en ce que** la portion d'extrémité (112) de la bague (16) est apte à se déformer élastiquement radialement à l'axe longitudinal (X12), pour permettre le déplacement de la dent interne (90 ; 402 ; 460) entre une position dégagée hors de la rainure externe (60 ; 310 ; 400) et la position engagée dans la rainure externe.

3. Élément mâle (10) selon l'une des revendications 1 à 2, **caractérisé en ce que**, en configuration montée de la bague sur la couronne, selon chacune des deux directions circonférentielles (C) à l'axe longitudinal (X12), la bague (16) est apte à venir en appui contre une face transversale (66 ; 322) de la couronne (22), en particulier contre une face transversale de fond (66) plane et orthoradiale de la rainure externe (60).

4. Élément mâle (10) selon l'une des revendications 1 à 3, **caractérisé en ce que**, en configuration montée de la bague sur la couronne, la dent interne (90 ; 402 ; 460) est apte à venir en butée suivant la direction longitudinale avant (X) contre une face avant (64) de la rainure externe (60 ; 400).

5. Élément mâle (10) selon la revendication 4, **caractérisé en ce que** la bague (16) comprend une portion distale annulaire (110) formant une extrémité avant de la bague, **en ce que** chaque portion d'extrémité (112) de la bague (16) s'étend depuis la portion distale annulaire et est circonférentiellement délimitée par deux fentes longitudinales (100 ; 450) adjacentes, et **en ce que** l'extrémité libre (91 ; 404) formant chaque dent interne (90 ; 402 ; 460) est une extrémité libre arrière de la portion d'extrémité.

6. Élément mâle (10) selon l'une des revendications 4 et 5, **caractérisé en ce que** la face avant (64) de la rainure externe (60 ; 400) est disposée, selon l'axe longitudinal (X12), au même niveau que chaque logement radial (50).

7. Élément mâle (10) selon l'une des revendications 4 à 6, **caractérisé en ce qu'**une face arrière (94) de chaque dent interne (90 ; 460) est sécante avec la face arrière (84) de la bague (16) et converge vers l'axe longitudinal (X12) suivant la direction longitudinale avant (X) et **en ce que** la face avant (64) de chaque rainure externe (60 ; 400) s'étend perpendiculairement à l'axe longitudinal (X12).

8. Élément mâle (10) selon l'une des revendications 1 à 7, **caractérisé en ce que** chaque fente longitudinale (100) de la bague (16) forme une encoche (100) avec butée externe (108).

9. Élément mâle (10) selon l'une des revendications 1 à 8, **caractérisé en ce que** la rainure externe (60) est décalée angulairement par rapport à chaque logement radial (50) de la couronne (22), autour de l'axe longitudinal (X12).

10. Élément mâle (10) selon l'une des revendications 1 à 9, **caractérisé en ce que** la paroi intérieure (52) de chaque logement radial (50) est en intersection sur tout son contour avec une surface de diamètre (D46) constant formant la face externe (46) de la couronne (22).

11. Élément mâle (10) selon l'une des revendications 1 à 10, **caractérisé en ce que**, pour chaque élément de verrouillage (14), la butée externe (108) est répartie autour de l'axe central radial (A50) du logement radial (50) associé à cet élément de verrouillage.

12. Élément mâle (10) selon l'une des revendications 1 à 11, **caractérisé en ce que** l'élément de verrouillage (14) est une bille de verrouillage et **en ce qu'**une épaisseur radiale (E16) entre la face externe (46) de la couronne (22) et la face externe (82) de la bague (16), mesurée au niveau du logement radial (50), est strictement inférieure à un rayon (R14) de la bille de verrouillage.

13. Élément mâle (10) selon l'une des revendications 1 à 12, **caractérisé en ce qu'**une partie (18) du corps mâle (12) délimite une face avant (36) qui est disposée en regard, suivant la direction longitudinale avant (X), de la face arrière (84) de la bague (16) et qui s'étend au-delà de la couronne (22) vers l'extérieur selon une direction radiale (R) à l'axe longitudinal (X12), et **en ce que** la partie (18) du corps mâle est monobloc avec l'extension tubulaire (20) et avec la couronne (22).

14. Élément mâle (10) de raccord selon l'une des revendications 1 à 13, **caractérisé en ce que** la bague (16) est en matière plastique polymère.

15. Raccord fluidique (250), comprenant un élément mâle (10) et un élément femelle (200), l'élément femelle comprenant un corps femelle (202) dans lequel est ménagée une gorge annulaire externe (242), et un manchon de verrouillage (230) qui présente une face de verrouillage (236) et qui est mobile par rapport au corps femelle, selon un axe longitudinal (X200) du corps femelle, entre une position de verrouillage dans laquelle la face de verrouillage (236) est alignée radialement avec la gorge annulaire externe (242), et une position de déverrouillage, dans laquelle la face de verrouillage est décalée de la gorge annulaire externe (242) selon l'axe longitudinal (X200) du corps femelle, **caractérisé en ce que** l'élément mâle (10) est selon l'une des revendications 1 à 14, **en ce que**, en position de déverrouillage du manchon de verrouillage (230), chaque élément de verrouillage (14) est libre de se déplacer en position externe au sein du logement radial (50), et **en ce que**, en configuration accouplée de l'élément mâle avec l'élément femelle, le manchon de verrouillage est en position de verrouillage, entoure la bague (16) et recouvre radialement l'encoche (100) pour maintenir l'élément de verrouillage (14) dans la gorge annulaire externe (242) du corps femelle, le corps femelle étant engagé dans l'espace annulaire (40).

## Patentansprüche

1. Steckanschlusselement (10) einer Fluidverbindung, umfassend:
- einen Steckkörper (12), der auf einer Längsachse (X12) zentriert ist, eine vordere Längsrichtung (X) definiert und Folgendes umfasst:
o eine rohrförmige Verlängerung (20), die auf der Längsachse zentriert ist, einen inneren Kanal (26) begrenzt und eine äußere radiale Fläche (42) aufweist, und
o eine Krone (22), die fest um die rohrförmige Verlängerung angeordnet ist und mindestens eine radiale Aufnahme (50) aufweist, wobei jede radiale Aufnahme in eine Innenseite (44) und eine Außenseite (46) der Krone (22) mündet, wobei die Innenseite (44) der Krone und die äußere radiale Fläche (42) der rohrförmigen Verlängerung radial zwischen sich einen ringförmigen Raum (40) begrenzen;
- Einen einteiligen Ring (16), der um die Krone herum angebracht ist;
- für jede radiale Aufnahme (50) ein Verriegelungselement (14), dessen Bewegung radial nach außen in der zugehörigen radialen Aufnahme (50) durch einen äußeren Anschlag (108) begrenzt wird, der durch den Ring (16) an einer Verbindung zwischen einer Kerbe (100; 301; 452) des Rings und einer Außenfläche (82) des Rings gebildet wird, wobei jedes Verriegelungselement (14) in seiner radialen Aufnahme (50) beweglich ist zwischen:
o einer inneren Position, in der das Verriegelungselement von der Innenseite (44) und der Außenseite (46) der Krone (22) vorsteht und nicht von der Außenseite (82) des Rings vorsteht, und in der das Verschieben jedes Verriegelungselements (14) radial nach innen in der zugehörigen radialen Aufnahme (50) durch einen inneren Anschlag (54) verhindert wird, der durch den Steckkörper (12) gebildet wird, und
o einer äußeren Position, in der das Verriegelungselement von der Außenseite (82) des Rings vorsteht,
wobei in der montierten Konfiguration des Rings (16) auf der Krone (22),
- der Steckkörper (12) in der vorderen Längsrichtung (X) einer hinteren Fläche (84) des Rings gegenüberliegt, und
- der Ring (16) entlang der vorderen Längsrichtung (X) dem Steckkörper (12) oder mindestens einem Verriegelungselement (14) gegenüberliegt, zumindest wenn sich dieses Verriegelungselement in der inneren Position befindet,
**dadurch gekennzeichnet, dass**:
- jede radiale Aufnahme (50) durch eine Innenwand (52) begrenzt ist, die zu der Krone (22) gehört, wobei sich die Innenwand (52) ganz um eine radiale Mittelachse (A50) der radialen Aufnahme herum erstreckt;
- der Ring (16) mindestens einen Längsschlitz (100; 300; 450) aufweist, der den Ring (16) radial durchdringt und auf der Rückseite (84) des Rings mündet;
- der Ring einen elastisch verformbaren Endabschnitt (112; 308) umfasst, der durch den Längsschlitz (100; 300; 450) und die Rückseite (84) des Rings begrenzt wird; und
- ein freies Ende (91; 311; 404) des Endabschnitts (112; 308) mindestens einen Innenzahn (90; 309; 402; 460), der in der montierten Konfiguration des Rings (16) auf der Krone (22) in eine äußere Nut (60; 310; 400) eingreift, die in der Außenfläche (46) der Krone vertieft ausgebildet ist.

2. Steckanschlusselement (10) nach Anspruch 1, **dadurch gekennzeichnet, dass** der Endabschnitt (112) des Rings (16) geeignet ist, sich elastisch radial zur Längsachse (X12) zu verformen, um die Bewegung des Innenzahns (90; 402; 460) zwischen einer aus der äußeren Nut (60; 310; 400) freigegebenen Position und der in die äußere Nut eingreifenden Position zu ermöglichen.

3. Steckanschlusselement (10) nach einem der Ansprüche 1 bis 2, **dadurch gekennzeichnet, dass** in der montierten Konfiguration des Rings auf der Krone in jeder der beiden Umfangsrichtungen (C) zur Längsachse (X12), der Ring (16) geeignet ist, gegen eine Querfläche (66; 322) der Krone (22) anzuliegen, insbesondere gegen eine ebene und orthoradiale Bodenquerfläche (66) der äußeren Nut (60).

4. Steckanschlusselement (10) nach einem der Ansprüche 1 bis 3, **dadurch gekennzeichnet, dass** in der montierten Konfiguration des Rings auf der Krone der Innenzahn (90; 402; 460) in der Lage ist, in der vorderen Längsrichtung (X) an einer Vorderseite (64) der äußeren Nut (60; 400) in Endlage anzuliegen.

5. Steckanschlusselement (10) nach Anspruch 4, **dadurch gekennzeichnet, dass** der Ring (16) einen ringförmigen distalen Abschnitt (110) umfasst, der ein vorderes Ende des Rings bildet, dass jeder Endabschnitt (112) des Rings (16) sich von dem ringförmigen distalen Abschnitt aus erstreckt und in Umfangsrichtung durch zwei benachbarte Längsschlitze (100; 450) begrenzt ist, und dass das freie Ende (91; 404), das jeden Innenzahn (90; 402; 460) bildet, ein hinteres freies Ende des Endabschnitts ist.

6. Steckanschlusselement (10) nach einem der Ansprüche 4 oder 5, **dadurch gekennzeichnet, dass** die Vorderseite (64) der äußeren Nut (60; 400) entlang der Längsachse (X12) auf gleicher Höhe mit jeder radialen Aufnahme (50) angeordnet ist.

7. Steckanschlusselement (10) nach einem der Ansprüche 4 bis 6, **dadurch gekennzeichnet, dass** eine hintere Fläche (94) jedes Innenzahns (90; 460) die hintere Fläche (84) des Rings (16) schneidet und in Richtung der Längsachse (X12) entlang der vorderen Längsrichtung (X) konvergiert, und dass die Vorderseite (64) jeder äußeren Nut (60; 400) sich senkrecht zur Längsachse (X12) erstreckt.

8. Steckanschlusselement (10) nach einem der Ansprüche 1 bis 7, **dadurch gekennzeichnet, dass** jeder Längsschlitz (100) des Rings (16) eine Kerbe (100) mit äußerem Anschlag (108) bildet.

9. Steckanschlusselement (10) nach einem der Ansprüche 1 bis 8, **dadurch gekennzeichnet, dass** die äußere Nut (60) gegenüber jeder radialen Aufnahme (50) der Krone (22) um die Längsachse (X12) winkelversetzt ist.

10. Steckanschlusselement (10) nach einem der Ansprüche 1 bis 9, **dadurch gekennzeichnet, dass** die Innenwand (52) jeder radialen Aufnahme (50) über ihren gesamten Umfang eine Fläche mit konstantem Durchmesser (D46) schneidet, die die Außenseite (46) der Krone (22) bildet.

11. Steckanschlusselement (10) nach einem der Ansprüche 1 bis 10, **dadurch gekennzeichnet, dass** für jedes Verriegelungselement (14) der äußere Anschlag (108) um die radiale Mittelachse (A50) der mit diesem Verriegelungselement verbundenen radialen Aufnahme (50) verteilt ist.

12. Steckanschlusselement (10) nach einem der Ansprüche 1 bis 11, **dadurch gekennzeichnet, dass** das Verriegelungselement (14) eine Verriegelungskugel ist und dass eine radiale Dicke (E16) zwischen der Außenfläche (46) der Krone (22) und der Außenfläche (82) des Rings (16), gemessen an der radialen Aufnahme (50), strikt kleiner ist als ein Radius (R14) der Verriegelungskugel.

13. Steckanschlusselement (10) nach einem der Ansprüche 1 bis 12, **dadurch gekennzeichnet, dass** ein Teil (18) des Steckkörpers (12) eine Vorderseite (36) begrenzt, die in der vorderen Längsrichtung (X) gegenüber der Rückseite (84) des Rings (16) angeordnet ist und die sich über die Krone (22) hinaus nach außen gemäß einer radialen Richtung (R) zur Längsachse (X12) erstreckt, und dass der Teil (18) des Steckkörpers einstückig mit der rohrförmigen Verlängerung (20) und mit der Krone (22) ist.

14. Steckanschlusselement (10) einer Verbindung nach einem der Ansprüche 1 bis 13, **dadurch gekennzeichnet, dass** der Ring (16) aus einem polymeren Kunststoffmaterial besteht.

15. Fluidverbindung (250), die ein Steckanschlusselement (10) und ein Buchsenelement (200) umfasst, wobei das Buchsenelement einen Buchsenkörper (202) mit einer äußeren ringförmigen Nut (242) darin und eine Verriegelungshülse (230) umfasst, die eine Verriegelungsfläche (236) aufweist und die in Bezug auf den Buchsenkörper entlang einer Längsachse (X200) des Buchsenkörpers zwischen einer Verriegelungsposition, in der die Verriegelungsfläche (236) radial mit der äußeren ringförmigen Nut (242) ausgerichtet ist, und einer Entriegelungsposition beweglich ist, in der die Verriegelungsfläche von der äußeren ringförmigen Nut (242) entlang der Längsachse (X200) des Buchsenkörpers versetzt ist, **dadurch gekennzeichnet, dass** das Steckanschlusselement (10) einem der Ansprüche 1 bis 14 entspricht, dass in der Entriegelungsposition der Verriegelungshülse (230) jedes Verriegelungselement (14) frei ist, sich in die äußere Position innerhalb der radialen Aufnahme (50) zu bewegen, und dass in der gekoppelten Konfiguration des Steckanschlusselements mit dem Buchsenelement die Verriegelungshülse in der Verriegelungsposition ist, den Ring (16) umgibt und die Kerbe (100) radial überlappt, um das Verriegelungselement (14) in der äußeren ringförmigen Nut (242) des Buchsenkörpers zu halten, wobei der Buchsenkörper in den ringförmigen Raum (40) eingreift.

## Claims

1. Male fluid connection element (10) comprising:
- a male body (12), centered on a longitudinal axis (X12), defining a forward longitudinal direction (X) and comprising:
∘ a tubular extension (20) centered on the longitudinal axis, delimiting an inner conduit (26) and having an outer radial face (42), and
∘ a crown (22) arranged in a fixed manner around the tubular extension and having at least one radial recess (50), each radial recess opening onto an inner face (44) and onto an outer face (46) of the crown (22), the inner face (44) of the crown and the outer radial face (42) of the tubular extension radially delimiting an annular space (40) between them;
- an integral ring (16) which is mounted around the crown;
- for each radial recess (50), a locking element (14) of which radially outward movement into the associated radial recess (50) is limited by an outer stop (108) formed by the ring (16) at a junction between a notch (100; 301; 452) of the ring and an outer face (82) of the ring, each locking element (14) being movable in the radial recess (50) thereof between:
∘ an inner position, in which the locking element projects from the inner face (44) and outer face (46) of the crown (22) and does not project from the outer face (82) of the ring, and in which movement of each locking element (14) radially inwardly into the associated radial recess (50) is prevented by an inner stop (54) formed by the male body (12), and
∘ an outer position, in which the locking element projects from the outer face (82) of the ring,
wherein, when the ring (16) is mounted on the crown (22),
- the male body (12) faces a rear face (84) of the ring in the forward longitudinal direction (X), and
- the ring (16) faces the male body (12) or at least one locking element (14) in the forward longitudinal direction (X), at least when said locking element is in the inner position,
**characterized in that**:
- each radial recess (50) is delimited by an inner wall (52) forming part of the crown (22), the inner wall (52) extending around a radial central axis (A50) of the radial recess;
- the ring (16) has at least one longitudinal slot (100; 300; 450) which passes radially through the ring (16) and opens onto the rear face (84) of the ring;
- the ring comprises a resiliently deformable end portion (112; 308) delimited by the longitudinal slot (100; 300; 450) and the rear face (84) of the ring; and
- a free end (91; 311; 404) of the end portion (112; 308) comprises at least one inner tooth (90; 309; 402; 460) which, when the ring (16) is mounted on the crown (22), is engaged in an outer groove (60; 310; 400), provided in the outer face (46) of the crown.

2. Male element (10) according to claim 1, **characterized in that** the end portion (112) of the ring (16) is able to resiliently deform radially to the longitudinal axis (X12), to allow movement of the inner tooth (90; 402; 460) between a position disengaged from the outer groove (60; 310; 400) and the position engaged in the outer groove.

3. Male element (10) according to either of claims 1 and 2, **characterized in that**, when the ring is mounted on the crown, in each of the two directions (C) circumferential to the longitudinal axis (X12), the ring (16) is able to abut a transverse face (66; 322) of the crown (22), in particular a planar and orthoradial transverse bottom face (66) of the outer groove (60).

4. Male element (10) according to any of claims 1 to 3, **characterized in that**, when the ring is mounted on the crown, the inner tooth (90; 402; 460) is able to abut a front face (64) of the outer groove (60; 400) in the forward longitudinal direction (X).

5. Male element (10) according to claim 4, **characterized in that** the ring (16) comprises an annular distal portion (110) forming a front end of the ring, **in that** each end portion (112) of the ring (16) extends from the annular distal portion and is circumferentially delimited by two adjacent longitudinal slots (100; 450), and **in that** the free end (91; 404) forming each inner tooth (90; 402; 460) is a rear free end of the end portion.

6. Male element (10) according to either of claims 4 and 5, **characterized in that** the front face (64) of the outer groove (60; 400) is arranged, along the longitudinal axis (X12), at the same level as each radial recess (50).

7. Male element (10) according to any of claims 4 to 6, **characterized in that** a rear face (94) of each inner tooth (90; 460) intersects the rear face (84) of the ring (16) and converges toward the longitudinal axis (X12) in the forward longitudinal direction (X) and **in that** the front face (64) of each outer groove (60; 400) extends perpendicular to the longitudinal axis (X12).

8. Male element (10) according to any of claims 1 to 7, **characterized in that** each longitudinal slot (100) of the ring (16) forms a notch (100) with an outer stop (108).

9. Male element (10) according to any of claims 1 to 8, **characterized in that** the outer groove (60) is angularly offset from each radial recess (50) of the crown (22), around the longitudinal axis (X12).

10. Male element (10) according to any of claims 1 to 9, **characterized in that** the inner wall (52) of each radial recess (50) intersects, along the entire contour thereof, with a surface of constant diameter (D46) forming the outer face (46) of the crown (22).

11. Male element (10) according to any of claims 1 to 10, **characterized in that**, for each locking element (14), the outer stop (108) is distributed around the radial central axis (A50) of the radial recess (50) associated with said locking element.

12. Male element (10) according to any of claims 1 to 11, **characterized in that** the locking element (14) is a locking ball, and **in that** a radial thickness (E16) between the outer face (46) of the crown (22) and the outer face (82) of the ring (16), measured at the level of the radial recess (50), is strictly less than a radius (R14) of the locking ball.

13. Male element (10) according to any of claims 1 to 12, **characterized in that** a portion (18) of the male body (12) delimits a front face (36) which is arranged opposite, in the forward longitudinal direction (X), the rear face (84) of the ring (16) and which extends beyond the crown (22) outwardly in a direction (R) radial to the longitudinal axis (X12), and **in that** the portion (18) of the male body is integral with the tubular extension (20) and with the crown (22).

14. Male connection element (10) according to any of claims 1 to 13, **characterized in that** the ring (16) is made of a polymeric plastics material.

15. Fluid connection (250), comprising a male element (10) and a female element (200), the female element comprising a female body (202) having an outer annular groove (242) therein, and a locking sleeve (230) which has a locking face (236) and which is movable relative to the female body along a longitudinal axis (X200) of the female body, between a locked position, in which the locking face (236) is radially aligned with the outer annular groove (242), and an unlocked position, in which the locking face is offset from the outer annular groove (242) along the longitudinal axis (X200) of the female body, **characterized in that** the male element (10) is according to any of claims 1 to 14, **in that**, when the locking sleeve (230) is in the unlocked position, each locking element (14) is free to move to an outer position within the radial recess (50), and **in that**, when the male element is coupled with the female element, the locking sleeve is in the locked position, surrounds the ring (16), and radially overlaps the notch (100) to hold the locking element (14) in the outer annular groove (242) of the female body, with the female body being engaged within the annular space (40).
